(19) Europäisches Patentamt
European Patent Office
Office européen des brevets

(11) **EP 4 566 435 A1**

(12) **EUROPEAN PATENT APPLICATION**

(43) Date of publication:
**11.06.2025 Bulletin 2025/24**

(21) Application number: **24207164.5**

(22) Date of filing: **17.10.2024**

(51) International Patent Classification (IPC):
**A01B 79/00** (2006.01)   **G06N 20/00** (2019.01)
**G06Q 10/04** (2023.01)   **G06Q 10/0631** (2023.01)

(52) Cooperative Patent Classification (CPC):
**A01B 79/005; G06N 20/00; G06Q 10/04;
G06Q 10/0631; G06Q 50/02**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.12.2023 US 202318531409**

(71) Applicant: **Deere & Company
Moline, IL 61265 (US)**

(72) Inventors:
• **JUST, John Paul
Ames, 50010 (US)**
• **MISHRA, Ajay
Asansol (IN)**
• **SORENSEN, Erik Andrew
Warren, 16365 (US)**

(74) Representative: **Reddie & Grose LLP
The White Chapel Building
10 Whitechapel High Street
London E1 8QS (GB)**

(54) **METHOD ANS APPARATUS FOR DETERMINING A TIME TO PERFORM AN AGRICULTURAL OPERATION**

(57)    Systems, apparatus, articles of manufacture, and methods are disclosed to determine a time to perform an agricultural operation, the method comprising: obtaining agricultural operation data, the agricultural operation data representing farmer decisions to perform agricultural operations; filtering the agricultural operation data to remove data associated with crop growing cycles outside an expected crop growing cycle duration based on a respective type of the crop, the filtering to create filtered agricultural operation data; accessing geospatial data, the geospatial data including at least climate data and satellite imaging data; combining the filtered agricultural operation data with the geospatial data based on a geographic and time similarity to create a training data set representing historic farmer decisions and corresponding agricultural and geospatial conditions; and training a machine learning model to generate a proposed time to perform an agricultural operation based on existing agricultural and geospatial conditions.

FIG. 1

**Description**

FIELD OF THE DISCLOSURE

This disclosure relates generally to agricultural operations and, more particularly, to methods and apparatus for determining the performance of agricultural operations.

BACKGROUND

In recent years, vehicles have become increasingly automated. Agricultural vehicles, for example, may semi-autonomously or fullyautonomously drive and perform operations on plots of land. When driving and performing operations on plots of land, agricultural vehicles may continuously monitor the plot of land to predict which areas of the plot of land will be ready to harvest. In this manner, machines may be automated in an efficient manner. By predicting field operations, farmers, dealers, and third parties, can plan efficient product usage and availability to aid the agricultural operation. The predictions of field operations may be based on previous farmer decisions, conditions of the plot of land, etc., to accurately pinpoint the order of farm operations.

BRIEF DESCRIPTION OF THE DRAWINGS

FIG. 1 is a block diagram of an example environment in which an example agricultural vehicle operates according to operation predictions.
FIG. 2 is a block diagram illustrating an example implementation of the server of FIG. 1.
FIG. 3 is a block diagram illustrating an example implementation of the example agricultural processing circuitry of FIG. 2.
FIG. 4 is a block diagram illustrating an example implementation of the example geospatial processing circuitry of FIG. 2.
FIG. 5 is a diagram of an example plot of land to perform operations predictions according to the server of FIG. 1.
FIG. 6 is a diagram of an example plot of land with regions to harvest highlighted according to time to harvest.
FIG. 7A is a first diagram representative of example agricultural operations performed by example agricultural vehicles including example sensors.
FIG. 7B is a second diagram representative of example agricultural operations performed by example agricultural vehicles including example sensors.
FIG. 8 is a diagram representative of an example harvesting operation performed by an example agricultural vehicle including example sensors.
FIG. 9 is a diagram representative of an example chart of example agricultural process data.
FIG. 10A is a first diagram representative of example crop growth calculations generated from example satellite images for the target plot of land of FIG. 5.
FIG. 10B is a second diagram representative of example crop growth calculations generated from example satellite images for the target plot of land of FIG. 5.
FIG. 11A is a third diagram representative of example crop growth calculations generated from example satellite images for the target plot of land of FIG. 5.
FIG. 11B is a fourth diagram representative of example crop growth calculations generated from example satellite images for the target plot of land of FIG. 5.
FIG. 12A is a first diagram representative of outlier filtering of the agricultural operation data.
FIG. 12B is a second diagram representative of outlier filtering of the agricultural operation data.
FIG. 13 is a flowchart representative of example machine-readable instructions and/or example operations that may be executed, instantiated, and/or performed by example programmable circuitry to implement the server circuitry of FIG. 2.
FIG. 14 is a flowchart representative of example machine-readable instructions and/or example operations that may be executed, instantiated, and/or performed by example programmable circuitry to implement the agricultural processing circuitry of FIG. 3.
FIG. 15 is a flowchart representative of example machine-readable instructions and/or example operations that may be executed, instantiated, and/or performed by example programmable circuitry to implement the geospatial processing circuitry of FIG. 4.
FIG. 16 is a block diagram of an example processing platform including programmable circuitry structured to execute, instantiate, and/or perform the example machine-readable instructions and/or perform the example operations of FIGS. 13-15 to implement the server circuitry of FIG. 2.

FIG. 17 is a block diagram of an example implementation of the programmable circuitry of FIG. 16.

FIG. 18 is a block diagram of another example implementation of the programmable circuitry of FIG. 16.

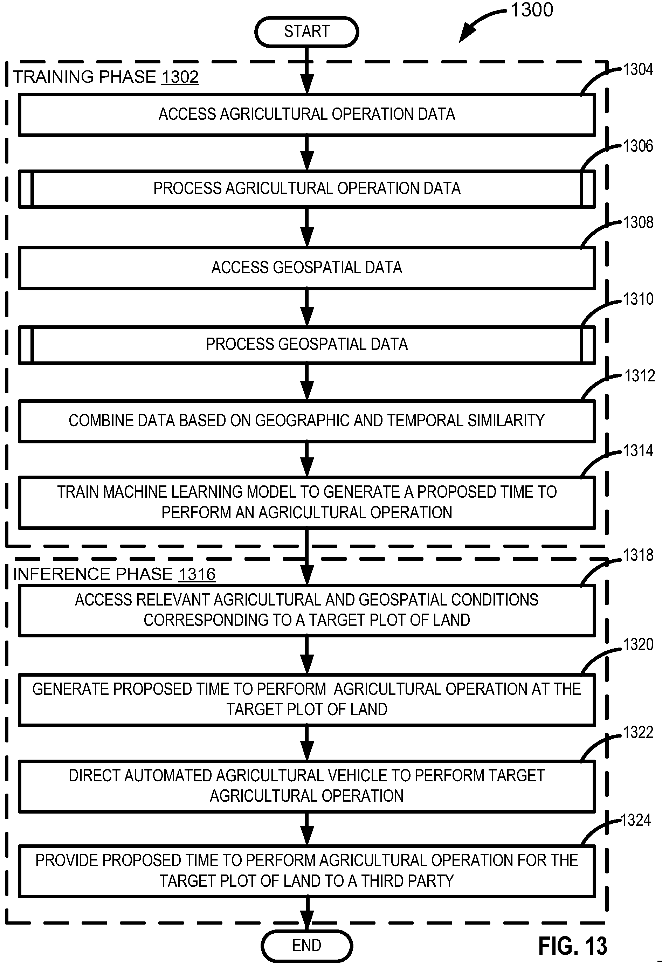

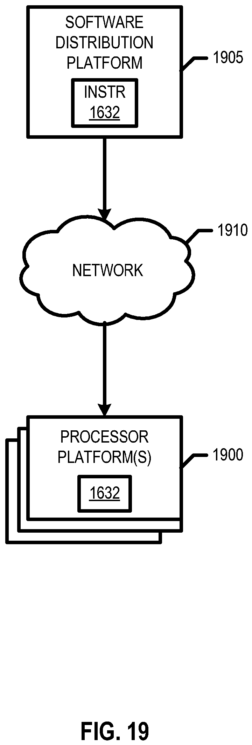

FIG. 19 is a block diagram of an example software/firmware/instructions distribution platform (e.g., one or more servers) to distribute software, instructions, and/or firmware (e.g., corresponding to the example machine-readable instructions of FIGS. 13-15) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale. Instead, the thickness of the layers or regions may be enlarged in the drawings. Although the figures show layers and regions with clean lines and boundaries, some or all of these lines and/or boundaries may be idealized. In reality, the boundaries and/or lines may be unobservable, blended, and/or irregular.

DETAILED DESCRIPTION

In order to automate agricultural operations, there is a need to continuously monitor and predict which plots of land will be ready for various machine operations in what order so that machines can be operated in an automated and optimal way. Farmers benefit directly by an enhanced operation determination system by understanding which plots of land they should send their fleet and which portions of that plot of land are ready for operation. Additionally, farmers require this information to know which areas of the plot of land are operation-ready or require more time for crop growth, to dry, etc., before operation. While farmers benefit directly, third parties and dealers of machinery need to know in advance which time of the year will be most active for their customers and autonomous fleet to ensure they have the right parts in stock at the right time for timely supply and repairs. Therefore, a tool utilizing a machine learning algorithm (e.g., a Crop Readiness Index algorithm) to order a customer's plots of land, in a manner to mimic how a farmer makes these decisions, by days until recommended operation time is disclosed. This algorithm may use a farmer decision database with globally scalable data sources (remote sensing, weather, soil type, terrain, radar imagery, etc.) to train a neural network to predict the optimal operation date for a plot of land agnostic of the crop type before the season begins.

Artificial intelligence (AI), including machine learning (ML), deep learning (DL), and/or other artificial machine-driven logic, enables machines (e.g., computers, logic circuits, etc.) to use a model to process input data to generate an output based on patterns and/or associations previously learned by the model via a training process. For instance, the model may be trained with data to recognize patterns and/or associations and follow such patterns and/or associations when processing input data such that other input(s) result in output(s) consistent with the recognized patterns and/or associations.

Many different types of machine learning models and/or machine learning architectures exist. In examples disclosed herein, a neural network model is used. Using a neural network model enables training to predict the optimal harvest date based on a historical farmer decision database from globally scalable satellite imagery, weather data, and other geospatial data surrounding the field. In general, machine learning models/architectures that are suitable to use in the example approaches disclosed herein will be neural networks. However, other types of machine learning models could additionally or alternatively be used such as clustering, etc.

In general, implementing a ML/AI system involves two phases, a learning/training phase and an inference phase. In the learning/training phase, a training algorithm is used to train a model to operate in accordance with patterns and/or associations based on, for example, training data. In general, the model includes internal parameters that guide how input data is transformed into output data, such as through a series of nodes and connections within the model to transform input data into output data. Additionally, hyperparameters are used as part of the training process to control how the learning is performed (e.g., a learning rate, a number of layers to be used in the machine learning model, etc.). Hyperparameters are defined to be training parameters that are determined prior to initiating the training process.

Different types of training may be performed based on the type of ML/AI model and/or the expected output. For example, supervised training uses inputs and corresponding expected (e.g., labeled) outputs to select parameters (e.g., by iterating over combinations of select parameters) for the MI/AI model that reduce model error. As used herein, labelling refers to an expected output of the machine learning model (e.g., a classification, an expected output value, etc.). Alternatively, unsupervised training (e.g., used in deep learning, a subset of machine learning, etc.) involves inferring patterns from inputs to select parameters for the ML/AI model (e.g., without the benefit of expected (e.g., labeled) outputs).

In examples disclosed herein, MI/AI models are trained using agricultural operation data and geospatial data. However, any other training algorithm may additionally or alternatively be used. In examples disclosed herein, training is performed until harvest of the target plot of land. In examples disclosed herein, training is performed remotely (e.g., at a central facility).

Training is performed using training data. In examples disclosed herein, the training data originates from agricultural operation data and geospatial data. Because supervised training is used, the training data is labeled. Labeling is applied to the training data by programmable circuitry according to the geographic location and time that the training data was collected. In some examples, the training data is pre-processed using, for example, filtering, outlier removal, interpolation, crop growth calculation, etc. In some examples, the training data is sub-divided into Uber h3 indexes that form a timeseries for a geographic location where data is grouped according to the time of collection.

Once training is complete, the model is deployed for use as an executable construct that processes an input and provides an output based on the network of nodes and connections defined in the model. The model is stored at machine learning training circuitry. The model may then be executed by inference circuitry. In some examples, the inference circuitry deploys the trained model using a Representational State Transfer (REST) Application Programming Interface (API) through Amazon Web Services (AWS) SageMaker®.

Once trained, the deployed model may be operated in an inference phase to process data. In the inference phase, data to be analyzed (e.g., live data) is input to the model, and the model executes to create an output. This inference phase can be thought of as the AI "thinking" to generate the output based on what it learned from the training (e.g., by executing the model to apply the learned patterns and/or associations to the live data). In some examples, input data undergoes pre-processing before being used as an input to the machine learning model. Moreover, in some examples, the output data may undergo post-processing after it is generated by the AI model to transform the output into a useful result (e.g., a display of data, an instruction to be executed by a machine, etc.).

In some examples, output of the deployed model may be captured and provided as feedback. By analyzing the feedback, an accuracy of the deployed model can be determined. If the feedback indicates that the accuracy of the deployed model is less than a threshold or other criterion, training of an updated model can be triggered using the feedback and an updated training data set, hyperparameters, etc., to generate an updated, deployed model.

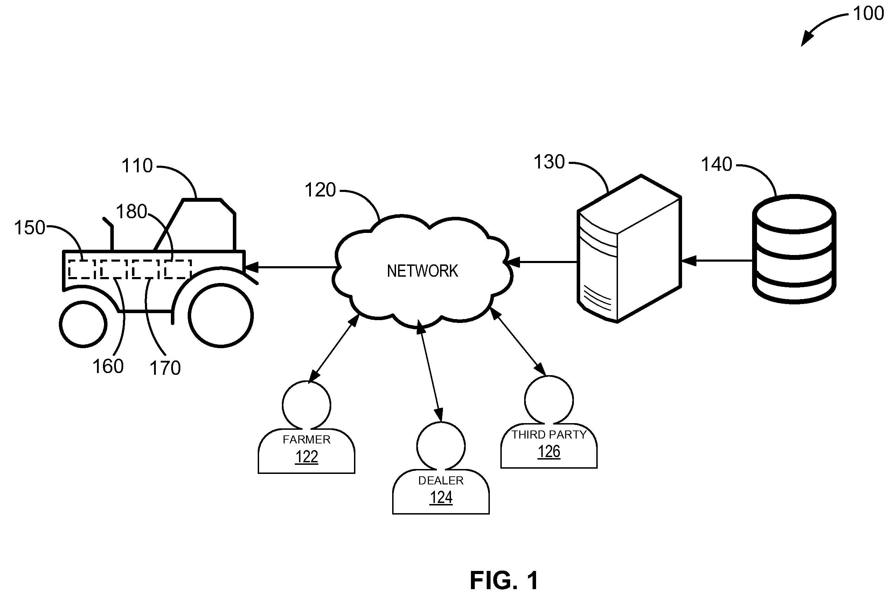

FIG. 1 is a block diagram of an example operational environment 100. An example vehicle 110 is in communication with a network 120, which is also in communication with one or more servers 130. The server 130 utilizes one or more databases 140 to store information used to determine performance of agricultural operations (e.g., time to harvest). In one example, the server 130 accesses information from the database 140 and determines one or more times the performance of agricultural operations, which are communicated through the network 120 to the vehicle 110.

The example vehicle 110 of FIG. 1 may be an agricultural vehicle (e.g., a tractor, a front loader, a harvester, a cultivator, a mower, a sprayer, or any other suitable vehicle), a construction vehicle, a forestry vehicle, or other work vehicle. In the example of FIG. 1, the vehicle 110 is represented as a tractor; however, other vehicles may additionally or alternatively be included. The vehicle 110 can move between different locations and over different terrain.

The example network 120 of FIG. 1 facilitates communication between the server 130 and the example vehicle 110. The example network 120 may be implemented by wireless communication, satellite communication, or other suitable communication technologies.

The example network 120 connects at least one of an example farmer 122, an example dealer 124, or an example third party 126. The network 120 provides to the example farmer 122 guidance for when the farmer 122 should perform the proposed agricultural operation. In some examples, the farmer 122 is a user operating an agricultural vehicle. In other examples, the farmer 122 can be a farm manager, foreman, or other farm employee. The dealer 124 is a third-party vendor that supplies the farmer 122 with equipment, supplies, or other agricultural services. The dealer 124 benefits from the server 130 by receiving forecasts of when the farmer 122 or other local customers are likely to need the dealer's services (e.g., supplies, replacement parts, repair services, and/or other agricultural services). In this way, the dealer 124 can anticipate the needs of the farmer 122 (e.g., customer) and prepare offerings ahead of the farmer request. The third party 126 tracks economic data regarding crop production and related economics. The third party 126 benefits from the proposed agricultural operation system by receiving predicted times for agricultural activities (e.g., crop harvests) which enable economic forecasting on a very small (e.g., per field) scale.

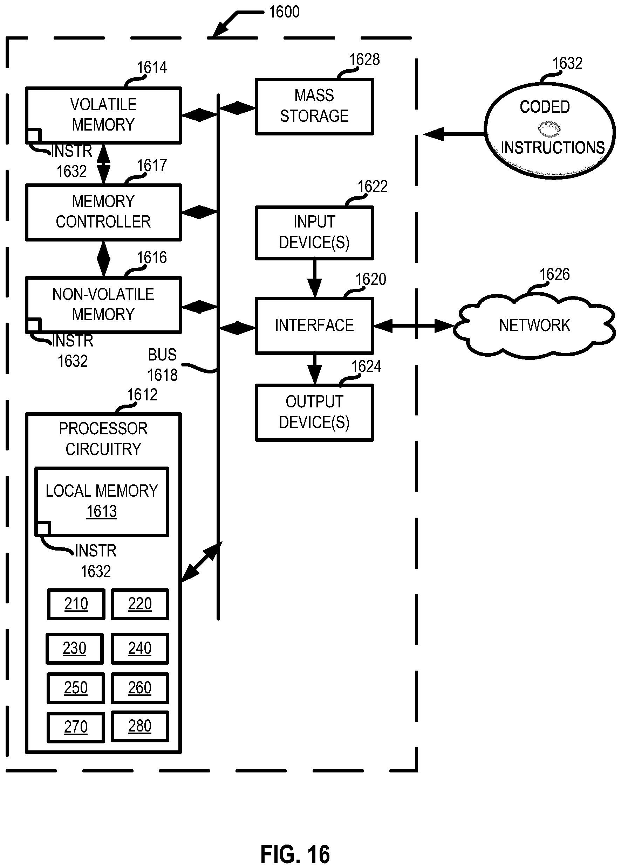

The example server 130 of FIG. 1 may be instantiated, implemented, or performed as described in connection with the processor circuitry of FIGS. 16-19.

The example database 140 of FIG. 1 stores information concerning plots of land, machine operations, conditions, geospatial location, etc., for use by the server 130. The example database 140 may be implemented by magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs. The database 140 may include data on farmer decisions to perform agricultural operations. Farmer decision data includes at least one of a time of an agricultural operation, a location of the agricultural operation, a type of agricultural operation (e.g., planting, spraying, harvesting, etc.), a type of crop (e.g., corn, soybeans, cotton, etc.), or a result of the agricultural operation (e.g., number of seeds planted, volume of fluid sprayed, weight of crops harvested, sensor readings related to the operation etc.). Planting includes the planting of crops which may include planting of seeds, rootstock, rhizomes, tubers, seedlings, or plants; planting seeds, rootstock, rhizomes, tubers, seedlings, or plants with respective genetic features, including but not limited to an estimated date or date range until harvest or maturity for a corresponding plant; and planting of seeds in one or more rows to a target seed density (e.g., fixed or variable seed density) or target seed spacing (e.g., fixed or variable seed spacing) per land area (e.g., acre or hectare), where some planters can vary seed density and seed spacing by row and as the planter traverses the field. The database 140 contains data on crops, including types of crops, typical crop growing cycle durations, and typical crop growing seasons. The database may, alternatively or additionally, include a climate database, a satellite image database, a soil database, and an agronomic database. The climate database may include time-based data on temperature, rainfall, and sunlight throughout the world. The satellite image database may contain timeindexed broad-spectrum images from global satellites. The soil database may include data on soil type (e.g., composition, acidity, etc.) from soils around the world. The agronomic database may include time-based machine health data, farming regulation data, silage capacity data, crop market price data, crop input cost data, available labor data, available equipment data, crop insurance data, and operation cost data.

While in the example of FIG. 1, the server 130 and the database 140 are shown separate from the vehicle 110, in other examples the functionality described herein as associated with the server 130 may be implemented within the vehicle 110. For example, the vehicle 110 may be equipped with processing power, such as a server, and data storage, such as a database, to implement the functions associated with the server 130 and the database 140 disclosed herein.

In FIG. 1, the example position determination system 150 may be a GNSS receiver included in the vehicle 110. This example position determination system 150 (e.g., John Deere StarFire®) may be equipped with Global Navigation Satellite System (GNSS), Global Positioning Systems (GPS), Light Detection and Ranging (LIDAR), Radio Detection and Ranging (RADAR), Sound Navigation and Ranging (SONAR), telematics sensors, etc. In some examples, the example GNSS receiver may use differential correction such as (a) precise point positioning (PPP) mode or wide area augmentation, or (b) RTK (real time kinematic) mode. The RTK system or mode requires at least one local base station that provides correction information wirelessly to the GNSS receiver with a wireless communications device that can receive correction data from the local base station in RTK. Similarly, the GNSS receiver operating as PPP, or on PPP mode, has a network of reference GNSS stations at known locations that provide a correction signal to the GNSS receiver on the vehicle 110 via a wireless communications device, such as a satellite communications device. In some examples, this position determination system 150 may be connected to a central server (e.g., John Deere Operations Center™ "OpsCenter", server 130 of FIG. 1) where operation data, climate data, etc., are stored from past operations on that plot of land. Each time the same plot of land has equipment travel over the land or perform an operation on that land, such as tilling, planting, spraying, harvesting, or performing other work tasks, data is collected to be stored in the database 140 for use in successive years.

The navigation system 160 receives, processes, and transmits example instructions to control operation of the vehicle 110. The navigation system 160 may also receive instructions to perform various machine operations such as, tilling, planting, spraying, harvesting, or other work tasks. Additionally or alternatively, the navigation system 160 may transmit information about the terrain and machine operation performed for a specific plot of land to the server 130.

The data store 170 receives, processes, and transmits example instructions from the server 130. The data store 170 may be a memory, and store instructions for later or contemporary use by the vehicle 110. The instructions contained in the data store 170 may correspond to either, or both, vehicle operation instructions or collected data from the plot of land. In some examples, the data store 170 may have cloud connection capabilities to communicate collected data (e.g., John Deere Modular Telematics Gateway).

The communication system 180 receives, processes, and transmits example instructions from the server 130 to the data store 170 and the navigation system 160. The communication system 180 may communicate instructions concerning agricultural operations, geospatial location, etc. The communication system 180 may be implemented as a wireless system, a cellular system, a satellite system, a radio system, etc.

The server 130 receives data from a database 140. The database 140 may be one database or comprised of several interconnected memory stores. The database 140 contains information regarding agricultural operation data and geospatial data. The agricultural operation data includes data on farmer decisions to perform agricultural operations, as disclosed above. The geospatial data includes climate data, satellite image data, etc., as disclosed above. The server 130 uses the database 140 to generate, through machine learning, a proposed time to perform an agricultural operation.

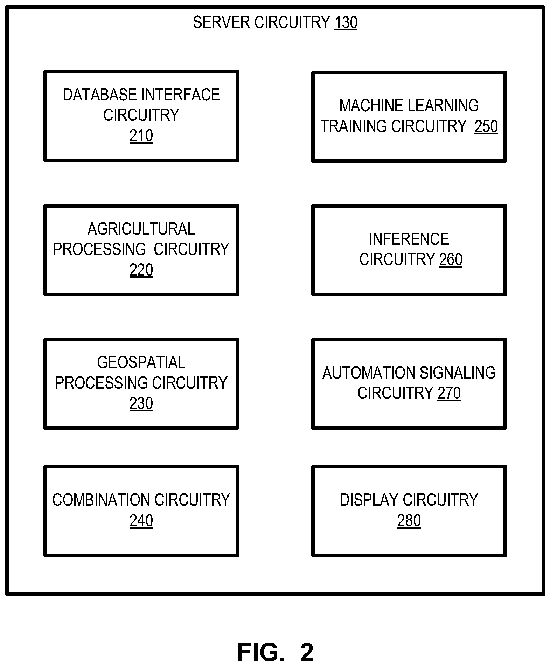

FIG. 2 is a block diagram representative of example server circuitry 130 to implement the server 130 of FIG. 1. The example server circuitry 130 includes example database interface circuitry 210, agricultural processing circuitry 220, geospatial processing circuitry 230, combination circuitry 240, machine learning training circuitry 250, inference circuitry 260, automation signaling circuitry 270, and display circuitry 280. It should be understood that some or all of the circuitry of FIG. 2 may, thus, be instantiated at the same or different times. Some or all of the circuitry of FIG. 2 may be instantiated, for example, in one or more threads executing concurrently on hardware and/or in series on hardware. Moreover, in some examples, some or all of the circuitry of FIG. 2 may be implemented by microprocessor circuitry executing instructions and/or FPGA circuitry performing operations to implement one or more virtual machines and/or containers.

The example server 130 of FIG. 1 may be instantiated (e.g., creating an instance of, bring into being for any length of time, materialize, implement, etc.) by programmable circuitry such as a Central Processor Unit (CPU) executing first instructions. Additionally or alternatively, the example server 130 of FIG. 1 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 2 may, thus, be instantiated at the same or different times. Some or all of the circuitry of FIG. 2 may be instantiated, for example, in one or more threads executing concurrently on hardware and/or in series on hardware. Moreover, in some examples, some or all of the circuitry of FIG. 2 may be implemented by microprocessor circuitry executing instructions and/or FPGA circuitry performing operations to implement one or more virtual machines and/or containers.

The server circuitry 130 includes example database interface circuitry 210. The database interface circuitry 210 accesses agricultural operation data and geospatial data for a target plot of land. In some examples, the database interface circuitry 210 may obtain the data from the database 140 or from several databases. Additionally or alternatively, the database interface circuitry 210 may allow user input to select target plot(s) of land and the type of data that is later analyzed by the machine learning model. In some examples, the database interface circuitry 210 is instantiated by programmable circuitry executing access/retrieval instructions and/or configured to perform operations such as those represented by the flowchart of FIG. 13 (blocks 1304 and 1308).

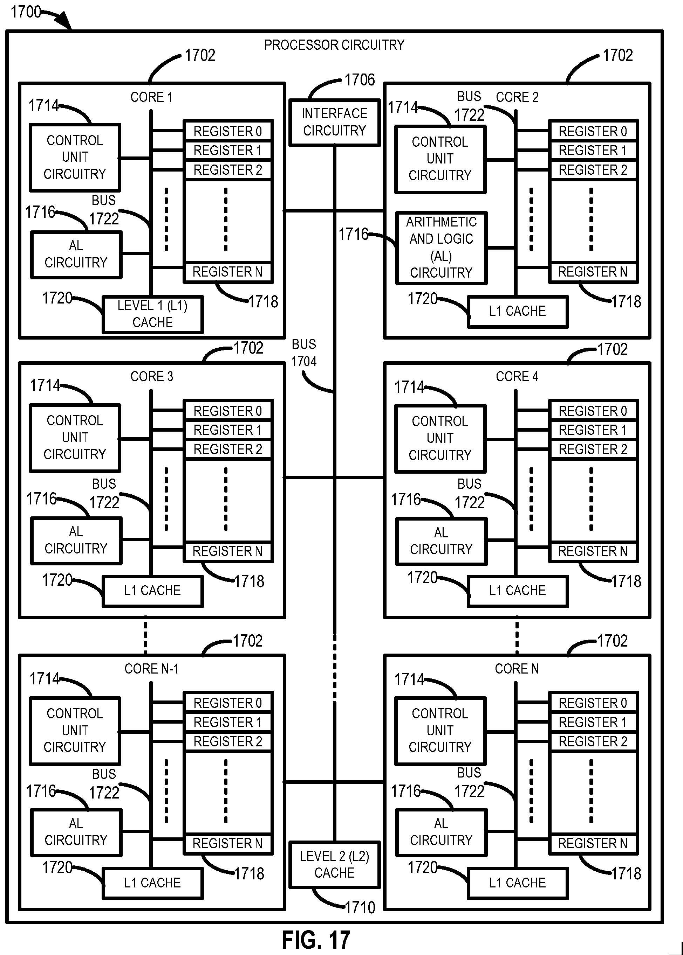

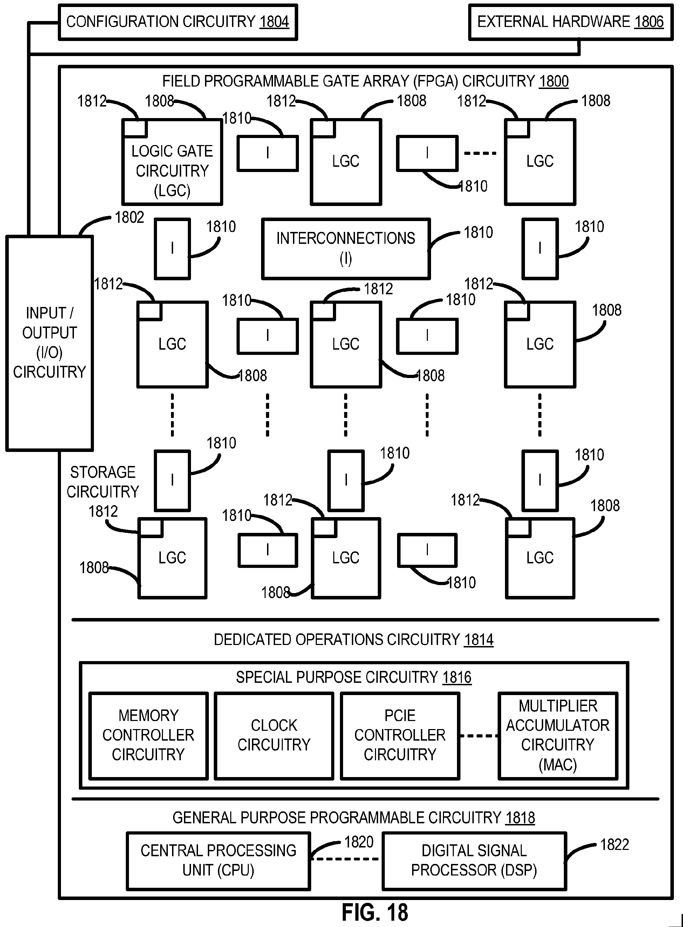

In some examples, the server 130 includes means for interfacing with a database. For example, the means for interfacing may be implemented by database interface circuitry 210. In some examples, the database interface circuitry 210 may be instantiated by programmable circuitry such as the example programmable circuitry 1612 of FIG. 16. For instance, the database interface circuitry 210 may be instantiated by the example microprocessor 1700 of FIG. 17 executing machine executable instructions such as those implemented by at least blocks 1304, 1308 of FIG. 13. In some examples, database interface circuitry 210 may be instantiated by hardware logic circuitry, which may be implemented by an ASIC, XPU, or the FPGA circuitry 1800 of FIG. 18 configured and/or structured to perform operations corresponding to the machine-readable instructions. Additionally or alternatively, the database interface circuitry 210 may be instantiated by any other combination of hardware, software, and/or firmware. For example, the database interface circuitry 210 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

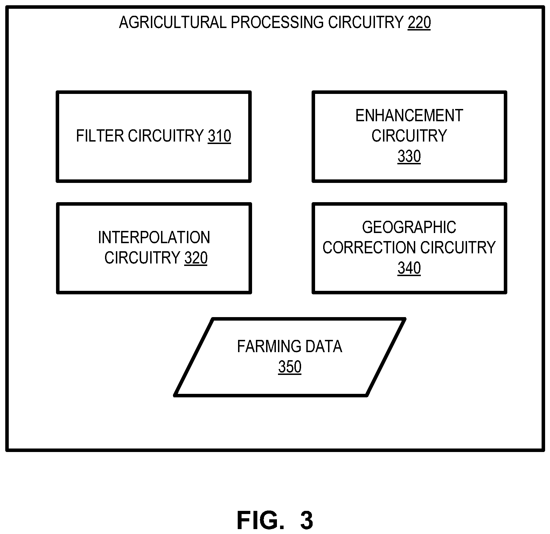

The server circuitry 130 includes example agricultural processing circuitry 220. In some examples, the agricultural processing circuitry 220 processes agricultural operation data by removing bad crop cycle duration data, removing data collected outside of an expected crop season, removing data associated with bad sensor readings, removing data collected outside of known plots of land, interpolating sensor data, synthesizing sensor data into result data, and storing data in a database. In some examples, the agricultural processing circuitry 220 provides the stored data for use by the machine learning training circuitry 250 to train a model. In some examples, the agricultural processing circuitry 220 processes data collected from a vehicle 110 with cloud connection capabilities (e.g., John Deere Modular Telematics Gateway). The agricultural processing circuitry 220 is explained in more detail below in connection with FIG. 3. In some examples, the agricultural processing circuitry 220 is instantiated by programmable circuitry executing processing instructions and/or configured to perform operations such as those represented by the flowcharts of FIGS. 13 (block 1306) and 14.

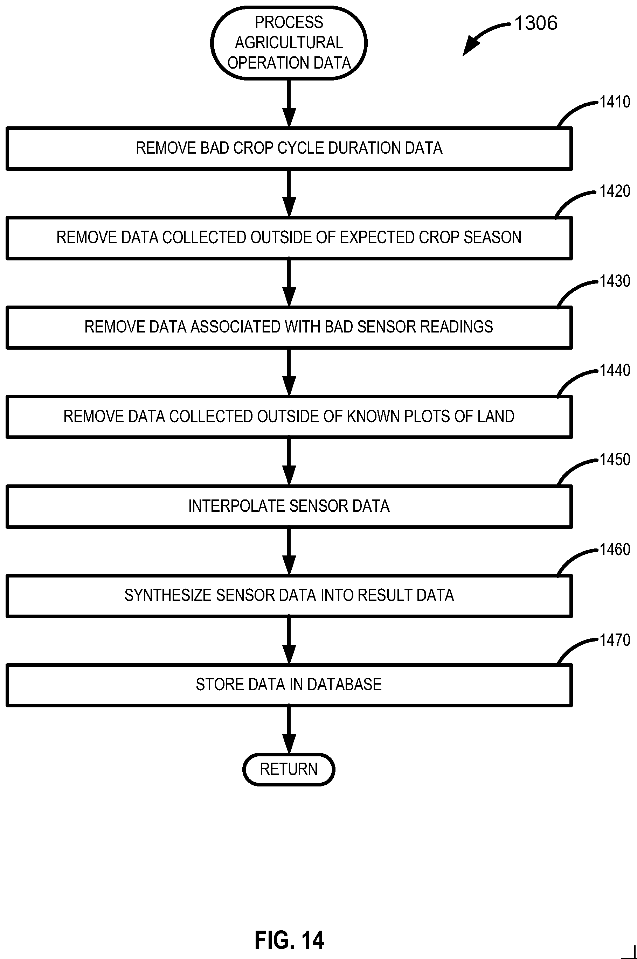

In some examples, the server 130 includes means for processing agricultural operation data. For example, the means for processing agricultural operation data may be implemented by agricultural processing circuitry 220. In some examples, the agricultural processing circuitry 220 may be instantiated by programmable circuitry such as the example programmable circuitry 1612 of FIG. 16. For instance, the agricultural processing circuitry 220 may be instantiated by the example microprocessor 1700 of FIG. 17 executing machine executable instructions such as those implemented by at least blocks 1306 of FIG. 13 and 1410-1470 of FIG. 14. In some examples, the agricultural processing circuitry 220 may be instantiated by hardware logic circuitry, which may be implemented by an ASIC, XPU, or the FPGA circuitry 1800 of FIG. 18 configured and/or structured to perform operations corresponding to the machine-readable instructions. Additionally or alternatively, the agricultural processing circuitry 220 may be instantiated by any other combination of hardware, software, and/or firmware. For example, the agricultural processing circuitry 220 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

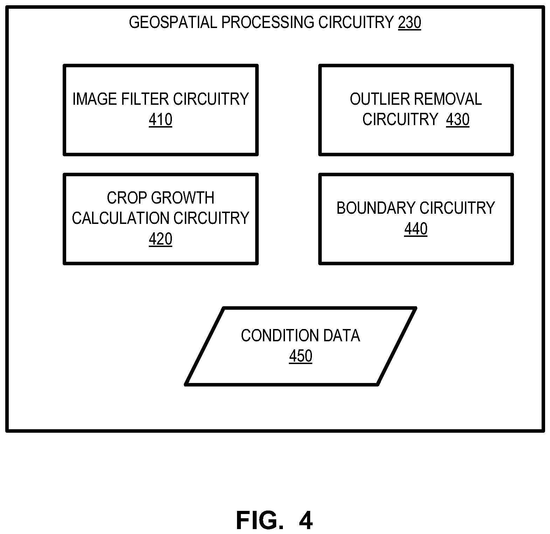

The server circuitry 130 includes example geospatial processing circuitry 230. In some examples, the geospatial processing circuitry 230 may remove bad image data, calculate crop growth data from image data, remove outliers, and store processed geospatial data. In some examples, the geospatial processing circuitry 230 provides this information for use by the machine learning training circuitry 250 to train a model. In some examples, the geospatial processing circuitry 230 processes data collected from a vehicle 110 with cloud connection capabilities (e.g., John Deere Modular Telematics Gateway). The geospatial processing circuitry 230 is explained in more detail below in connection with FIG. 4. In some examples, the geospatial processing circuitry 230 is instantiated by programmable circuitry executing processing instructions and/or configured to perform operations such as those represented by the flowcharts of FIGS. 13 (block 1310) and 15.

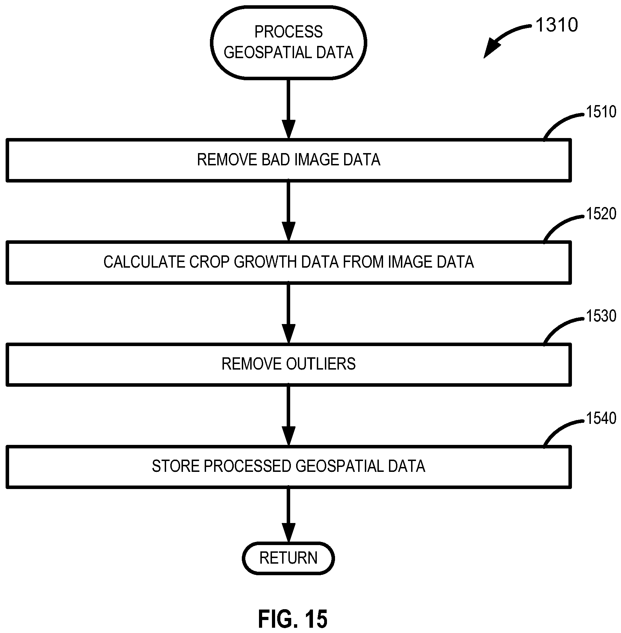

In some examples, the server 130 includes means for processing geospatial data. For example, the means for processing geospatial data may be implemented by geospatial processing circuitry 230. In some examples, the geospatial processing circuitry 230 may be instantiated by programmable circuitry such as the example programmable circuitry 1612 of FIG. 16. For instance, the geospatial processing circuitry 230 may be instantiated by the example microprocessor 1700 of FIG. 17 executing machine executable instructions such as those implemented by at least blocks 1310 of FIG. 13 and 1510-1540 of FIG. 15. In some examples, the geospatial processing circuitry 230 may be instantiated by hardware logic circuitry, which may be implemented by an ASIC, XPU, or the FPGA circuitry 1800 of FIG. 18 configured and/or structured to perform operations corresponding to the machine-readable instructions. Additionally or alternatively, the geospatial processing circuitry 230 may be instantiated by any other combination of hardware, software, and/or firmware. For example, the geospatial processing circuitry 230 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

The server circuitry 130 includes example combination circuitry 240. The combination circuitry 240 combines data from the database interface circuitry 210 based on the time and the geospatial location of data collection (e.g., a first data point is combined with a second data point when collected at a similar, or identical, time and location). In this way, geospatial data (e.g., climate data, satellite imagery, etc.) and agricultural operation data (e.g., a type of agricultural operation, a result of an agricultural operation, etc.) can be correlated to a plot of land that is being cultivated at a given time. In some examples, the combination circuitry 240 aggregates geospatial data points into Uber h3 indexes for spatial alignment. Then, the combination circuitry 240 extracts georeferenced coordinates (e.g., latitude and longitude coordinates) for each data point with a time stamp corresponding to the time of recordation (e.g., collection) of the data point. Then, the combination circuitry 240 finds the associated hex id for each data point based on the georeferential (e.g., latitudinal and longitudinal) location. After the combination circuitry 240 finds the associated hex id, the combination circuitry 240 aggregates data points by common hex id and timestamp using min, max, mean, median, and standard deviation aggregation functions. After aggregation, the combination circuitry 240 converts the data into a table format where the primary keys are hex id and timestamp. After conversion into a table, the combination circuitry 240 joins different spatially aligned data sets (e.g., remote sensing and machine sensor data, agricultural data and geospatial data) based on common hex id and timestamp. Then, the combination circuitry 240 exports the data for model training. In some examples, the combination circuitry 240 is instantiated by programmable circuitry executing data combination instructions and/or configured to perform operations such as those represented by the flowchart of FIG. 13 (block 1312).

In some examples, the server 130 includes means for combining data. For example, the means for combining may be implemented by combination circuitry 240. In some examples, the combination circuitry 240 may be instantiated by programmable circuitry such as the example programmable circuitry 1612 of FIG. 16. For instance, the combination circuitry 240 may be instantiated by the example microprocessor 1700 of FIG. 17 executing machine executable instructions such as those implemented by at least block 1312 of FIG. 13. In some examples, the combination circuitry 240 may be instantiated by hardware logic circuitry, which may be implemented by an ASIC, XPU, or the FPGA circuitry 1800 of FIG. 18 configured and/or structured to perform operations corresponding to the machine-readable instructions. Additionally or alternatively, the combination circuitry 240 may be instantiated by any other combination of hardware, software, and/or firmware. For example, the combination circuitry 240 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

The server circuitry 130 of FIG. 2 includes example machine learning training circuitry 250. The machine learning training circuitry 250 creates (e.g., trains) a model using data combined from the database 140 (e.g., data concerning agricultural operation, geospatial location, etc.) to generate a proposed performance (e.g., time until operation) of an agricultural operation. The machine learning training circuitry 250 analyzes historic agricultural operation data, historic crop growth data, and historic climate data at a specific location. Based on this analysis, the machine learning training circuitry 250 generates a model based on the interrelation of each data set over time. In some examples, the model can relate crop growth, rain fall, and prior agricultural activities to a subsequent crop harvesting operation. By processing a plurality of such examples, the model, in this example, can begin to relate the variables of a particular crop's growth to their impact on the final harvest date. Thus, the model can suggest a future time to perform a harvest operation based on a set of collected data (e.g., agricultural operation data, geospatial data, etc.). In other examples, the machine learning training circuitry 250 may be used to predict various agricultural operations (e.g., planting, spraying fertilizer, spraying pesticide, etc.). In some examples, the machine learning training circuitry 250 is instantiated by programmable circuitry executing machine learning training instructions and/or configured to perform operations such as those represented by the flowchart of FIG. 13 (blocks 1314).

In some examples, the server 130 includes means for training a machine learning model. For example, the means for training may be implemented by machine learning training circuitry 250. In some examples, the machine learning training circuitry 250 may be instantiated by programmable circuitry such as the example programmable circuitry 1612 of FIG. 16. For instance, the machine learning training circuitry 250 may be instantiated by the example microprocessor 1700 of FIG. 17 executing machine executable instructions such as those implemented by at least block 1314 of FIG. 13. In some examples, the machine learning training circuitry 250 may be instantiated by hardware logic circuitry, which may be implemented by an ASIC, XPU, or the FPGA circuitry 1800 of FIG. 18 configured and/or structured to perform operations corresponding to the machine-readable instructions. Additionally or alternatively, the machine learning training circuitry 250 may be instantiated by any other combination of hardware, software, and/or firmware. For example, the machine learning training circuitry 250 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

The server circuitry 130 includes example inference circuitry 260. The inference circuitry 260 accesses relevant agricultural and geospatial conditions corresponding to a target plot of land, and generates a proposed time to performance of an agricultural operation at the target plot of land. In some examples, the inference circuitry 260 uses the model trained by the machine learning training circuitry 250 to determine a proposed time to perform an agricultural operation. In some examples, the inference circuitry 260 uses the model trained by the machine learning circuitry 250 to analyze training data arranged into a timeline of farmer decisions leading to harvest to learn how geospatial data impacted the farmer's decision to harvest. In this example, the inference circuitry 260 analyzes the progress of crop growth based on satellite imagery, rain data for that season, temperature data for that season, planting data for that season, etc. In some examples, the inference circuitry 260 deploys the trained model using a REST API through AWS SageMaker®. In this example, the inputs include the boundaries of the field and the remote sensing imagery. After running the inputs through the model, the inference circuitry 260 outputs a predictive work plan. In some examples, the inference circuitry 260 is instantiated by programmable circuitry executing inference instructions and/or configured to perform operations such as those represented by the flowchart of FIG. 13 (blocks 1318-1320).

In some examples, the server 130 includes means for inferring performance of an operation. For example, the means for inferring may be implemented by inference circuitry 260. In some examples, the inference circuitry 260 may be instantiated by programmable circuitry such as the example programmable circuitry 1612 of FIG. 16. For instance, the inference circuitry 260 may be instantiated by the example microprocessor 1700 of FIG. 17 executing machine executable instructions such as those implemented by at least blocks 1318-1320 of FIG. 13. In some examples, the inference circuitry 260 may be instantiated by hardware logic circuitry, which may be implemented by an ASIC, XPU, or the FPGA circuitry 1800 of FIG. 18 configured and/or structured to perform operations corresponding to the machine-readable instructions. Additionally or alternatively, the inference circuitry 260 may be instantiated by any other combination of hardware, software, and/or firmware. For example, the inference circuitry 260 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

The server circuitry 130 of FIG. 2 includes example automation signaling circuitry 270. The automation signaling circuitry 270 directs the vehicle 110 to perform a target agricultural operation over a plot of land. In some examples, the automation signaling circuitry 270 utilizes a ranking of a farmer's plots of land by harvest date to automate and optimize a fleet to complete the agricultural operation. In some examples, the automation signaling circuitry 270 may signal to the vehicle 110 how to optimally complete all harvest operations for the season given fleet-specific information (e.g., number of harvesters and/or size of harvesters). In some examples, the automation signaling circuitry 270 is instantiated by programmable circuitry executing signaling instructions and/or configured to perform operations such as those represented by the flowchart of FIG. 13 (block 1322).

In some examples, the server 130 includes means for signaling a vehicle to perform an autonomous operation. For example, the means for signaling may be implemented by automation signaling circuitry 270. In some examples, the automation signaling circuitry 270 may be instantiated by programmable circuitry such as the example programmable circuitry 1612 of FIG. 16. For instance, the automation signaling circuitry 270 may be instantiated by the example microprocessor 1700 of FIG. 17 executing machine executable instructions such as those implemented by at least block 1322 of FIG. 13. In some examples, the automation signaling circuitry 270 may be instantiated by hardware logic circuitry, which may be implemented by an ASIC, XPU, or the FPGA circuitry 1800 of FIG. 18 configured and/or structured to perform operations corresponding to the machine-readable instructions. Additionally or alternatively, the automation signaling circuitry 270 may be instantiated by any other combination of hardware, software, and/or firmware. For example, the automation signaling circuitry 270 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

The server circuitry 130 of FIG. 2 includes example display circuitry 280. The display circuitry 280 may be located on the vehicle, a mobile device, a desktop computer, etc. The display circuitry 280 displays to the user (e.g., farmer, dealer, third party, etc.) the output of the server circuitry 130. In some examples, the display circuitry 280 provides a proposed time to perform an agricultural operation for the target plot of land to a third party. In some examples, the output of the server circuitry 130 is a ranking of the plots of land of a farmer in order of harvest date (e.g., from earliest harvest date to latest harvest date in a given season, year, or other time span). In some examples, the display circuitry 280 may include a mechanism to receive user input concerning the size of their fleet, feedback on displayed rankings, or further calibration feedback to tailor the results of the server circuitry 130 to the user's plot of land. In some examples, the display circuitry 280 is instantiated by programmable circuitry executing display instructions and/or configured to perform operations such as those represented by the flowchart of FIG. 13 (block 1324).

In some examples, the server 130 includes means for displaying proposed performance of a vehicle. For example, the means for displaying may be implemented by display circuitry 280. In some examples, the display circuitry 280 may be instantiated by programmable circuitry such as the example programmable circuitry 1612 of FIG. 16. For instance, the display circuitry 280 may be instantiated by the example microprocessor 1700 of FIG. 17 executing machine executable instructions such as those implemented by at least block 1324 of FIG. 13. In some examples, the display circuitry 280 may be instantiated by hardware logic circuitry, which may be implemented by an ASIC, XPU, or the FPGA circuitry 1800 of FIG. 18 configured and/or structured to perform operations corresponding to the machine-readable instructions. Additionally or alternatively, the display circuitry 280 may be instantiated by any other combination of hardware, software, and/or firmware. For example, the display circuitry 280 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

FIG. 3 is a block diagram representative of an example implementation of the server 130 of FIG. 1 to implement the agricultural processing circuitry 220 of FIG. 2. The example agricultural processing circuitry 220 includes example filter circuitry 310, example interpolation circuitry 320, example enhancement circuitry 330, example geographic correction circuitry 340, and example farming data 350. It should be understood that some or all of the circuitry of FIG. 3 may, thus, be instantiated at the same or different times. Some or all of the circuitry of FIG. 3 may be instantiated, for example, in one or more threads executing concurrently on hardware and/or in series on hardware. Moreover, in some examples, some or all of the circuitry of FIG. 3 may be implemented by microprocessor circuitry executing instructions and/or FPGA circuitry performing operations to implement one or more virtual machines and/or containers.

The example agricultural processing circuitry 220 includes example filter circuitry 310. In some examples, the filter circuitry 310 may remove bad crop cycle duration data, remove data collected outside of the expected crop season, remove data associated with bad sensor readings, and remove data collected outside of known plots of land. In some examples, the filter circuitry 310 may remove cloudy images or bad quality images for remote sensing imagery. Additionally, the filter circuitry 310 may remove outliers using inter-quartile range (IQR) techniques for pixel values of the images. As used herein, IQR is defined as a measure of statistical dispersion to identify the data between the $75^{th}$ and $25^{th}$ percentiles of the data. Therefore, as used herein, IQR is a technique of outlier removal where data values located between the $0^{th}$ to $25^{th}$ percentile and the $75^{th}$ to $100^{th}$ percentile are removed by the filter circuitry 310. In some examples, additionally or alternatively, the filter circuitry 310 may remove outliers of a data set and replace with null values or empty values. IQR may be implemented to remove outlier season lengths (e.g., an anomalous farmer decision based on historical decisions for that season). An example of an anomalous farmer decision based on historical decisions may be when the expected season length for corn and soy plants is 155 days, but for winter wheat the expected season length is 260 days. If the growing season for either of these crops exceeds this expected season length, the filter circuitry 310 will remove the outlier data as anomalous. Additionally or alternatively, the filter circuitry 310 may filter operations with unexpected values. Operations with unexpected values may include operations that likely do not cover the specific plot of land, missing sensor values due to sensor malfunctions, and/or operations that are out of season (e.g., harvesting corn in March in Iowa). In some examples, the filter circuitry 310 is instantiated by programmable circuitry executing filter instructions and/or configured to perform operations such as those represented by the flowchart of FIG. 14 (blocks 1410-1440).

The example agricultural processing circuitry 220 may include example interpolation circuitry 320. The interpolation circuitry 320 may interpolate sensor data corresponding to agricultural operations. In some examples, the interpolation circuitry 320 may fill small gaps of missing data across time and geographic area utilizing rolling average or forward filling techniques over a known time and known geographic area. In some examples, the interpolation circuitry 320 is instantiated by programmable circuitry executing interpolation instructions and/or configured to perform operations such as those represented by the flowchart of FIG. 14 (block 1450).

The example agricultural processing circuitry 220 includes example enhancement circuitry 330. The example enhancement circuitry 330 may combine sensor readings (e.g., sensor readings collected by the data store 170 of FIG. 1) into useful features (e.g., raw strike plate force from grain interpolated into yield value). In some examples, the enhancement circuitry 330 is instantiated by programmable circuitry executing enhancement instructions and/or configured to perform operations such as those represented by the flowchart of FIG. 14 (blocks 1460).

The example agricultural processing circuitry 220 includes example geographic correction circuitry 340. The geographic correction circuitry 340 may aid in synthesizing data into the result agricultural operation data. In some examples, the geographic correction circuitry 340 transforms raw machine sensor data (e.g., data collected by data store 170 of FIG. 1) to spatially and temporally align the raw machine sensor data with other sensor data to ensure accuracy. In some examples, the geographic correction circuitry 340 is instantiated by programmable circuitry executing geographic correction instructions and/or configured to perform operations such as those represented by the flowchart of FIG. 14 (block 1460).

The example agricultural processing circuitry 220 processes example farming data 350. The farming data 350 may be historical data gathered over time, and the farmer's decision to operate based on climate conditions (e.g., conditions of the plot of land, weather, soil type, crop conditions) and extra-farmer conditions (e.g., vehicle health, farming regulations, silage capacity, crop market price conditions, crop input costs, available labor, available equipment, crop insurance, and operations costs). In some examples, the farming data 350 is instantiated by programmable circuitry executing access/storage instructions and/or configured to perform operations such as those represented by the flowchart of FIGS. 13 (block 1304) and 14 (block 1470).

FIG. 4 is a block diagram representative of an example implementation of the server 130 of FIG. 1 to implement the geospatial processing circuitry 230 of FIG. 2. The example geospatial processing circuitry 230 includes example image filter circuitry 410, example crop growth calculation circuitry 420, example outlier removal circuitry 430, example boundary circuitry 440, and example condition data 450. It should be understood that some or all of the circuitry of FIG. 4 may, thus, be instantiated at the same or different times. Some or all of the circuitry of FIG. 4 may be instantiated, for example, in one or more threads executing concurrently on hardware and/or in series on hardware. Moreover, in some examples, some or all of the circuitry of FIG. 4 may be implemented by microprocessor circuitry executing instructions and/or FPGA circuitry performing operations to implement one or more virtual machines and/or containers.

The example geospatial processing circuitry includes example image filter circuitry 410. The image filter circuitry 410 may remove bad image data. In some examples, the image filter circuitry 410 filters out cloudy images or bad quality images from remote sensory imagery. In some examples, the image filter circuitry 410 is instantiated by programmable circuitry executing image filter instructions and/or configured to perform operations such as those represented by the flowchart of FIG. 15 (block 1510).

The geospatial processing circuitry 230 includes example crop growth calculation circuitry 420. The crop growth calculation circuitry 420 may remove bad image data. In some examples, the crop growth calculation circuitry 420 computes additional images from imagery collected by the sensors, satellites, etc. To instantiate the computation of additional images, the crop growth calculation circuitry 420 may utilize Normalized Difference Vegetation Index (NDVI), Normalized Difference Water Index (NDWI), and/or Modified Soil Adjusted Vegetation Index (MSAVI). In each of these examples, the features generated by the crop growth calculation circuitry 420 are calculated by combining bands from the imagery to identify patterns in the image (e.g., wet spots in the field, crop-vegetation health, etc.). In some examples, the crop growth calculation circuitry 420 is instantiated by programmable circuitry executing crop growth calculation instructions and/or configured to perform operations such as those represented by the flowchart of FIG. 15 (block 1520).

As used herein, Normalized Difference Vegetation Index (NDVI) is defined as a technique to quantify vegetation greenness to determine vegetation density and plant health. In some examples, to perform NDVI, the crop growth calculation circuitry 420 utilizes the following formula to compute the features:

$$NDVI = \frac{(NIR-R)}{(NIR+R)},$$

wherein NDVI is quantified as the ratio between near infrared values (NIR) and red values (R). NDVI defines values between -1 to 1, where negative values correlate to clouds, water, and snow; values closer to and at zero correlate to rocks and bare soil; and positive values correlate to areas of high vegetation and/or healthy vegetation.

As used herein, Normalized Difference Water Index (NDWI) is defined as a technique to map bodies of water and monitor changes to bodies of water. In some examples, to perform NDWI, the crop growth calculation circuitry 420 utilizes the following formula to compute the features:

$$NDWI = \frac{(NIR-SWIR)}{(NIR+SWIR)},$$

wherein NDWI is quantified as a ratio between near infrared values (NIR) and short-wave infrared values (SWIR). NDWI defines values between -1 to 1, where negative values correlate to areas with no vegetation or water content, and values close to zero and/or positive represent water content.

As used herein, Modified Soil Adjusted Vegetation Index (MSAVI) is defined as a technique to determine the greenness of vegetation (like NDVI) in an area while minimizing the effect of bare soil on the value. In some examples, to perform MSAVI, the crop growth calculation circuitry 420 utilizes the following formula to compute the features:

$$MSAVI = \frac{(2 \times NIR + 1 - \sqrt{((2 \times NIR + 1)^2 - 8 \times (NIR - R)))}}{2},$$

wherein MSAVI is quantified as a ratio between near infrared values (NIR) and red values (R). MSAVI defines values between -1 to 1, where values from -1 to 0.2 correlate to bare soil, 0.2 to 0.4 correlate to seed germination, 0.4 to 0.6 correlate to leaf development, and 0.6 to 1 correlate to dense vegetation.

The geospatial processing circuitry 230 includes outlier removal circuitry 430. The outlier removal circuitry 430 removes outliers from the geospatial data. In some examples, the outlier removal circuitry 430 filters outliers using an IQR technique (described above) for pixel values, wherein outlier pixel values are replaced will null or empty values. In some examples, the outlier removal circuitry 430 is instantiated by programmable circuitry executing outlier removal instructions and/or configured to perform operations such as those represented by the flowchart of FIG. 15 (block 1530).

The example geospatial processing circuitry 230 includes example boundary circuitry 440. The boundary circuitry 440 may generate geographic boundaries based on operation area for use by the combination circuitry 260. In some examples, the boundary circuitry 440 may generate GeoJson boundaries around the machine sensor data grouped by customer operations. In this example, the result is one polygon per customer operation. In some examples, the boundary circuitry 440 is instantiated by programmable circuitry executing boundary instructions and/or configured to perform operations such as those represented by the flowchart of FIGS. 13 (block 1312).

The example geospatial processing circuitry 230 processes example condition data 450. Condition data 450 may include location (GPS, GNSS, SONAR, georeferenced coordinates, etc.), timestamp, crop yield, crop moisture, crop biomass, crop type, crop variety, seed population/density, fertilizer/fungicide applied, optical images, radar images, machine captured images, drone imagery, etc. In some examples, the condition data 450 is instantiated by programmable circuitry executing access/storage instructions and/or configured to perform operations such as those represented by the flowcharts of FIGS. 13 (block 1308) and 15 (block 1540).

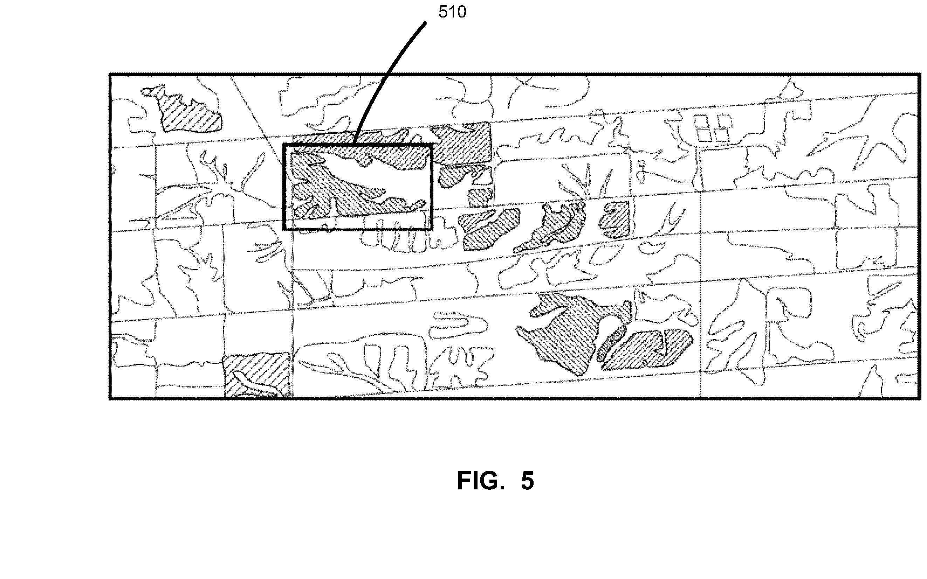

FIG. 5 is a diagram of an example plot of land 510 to perform example operation predictions by the server 130 of FIG. 1. FIG. 5 may be shown as part of the interface by the display circuitry 280 of FIG. 2. As part of the interface, the diagram may be a holistic map-based view which orders the plots of land by crop readiness per plot of land for logistics planning. This holistic map diagram may include a time slider to enable the user to review the development of their crop over time with the algorithm results.

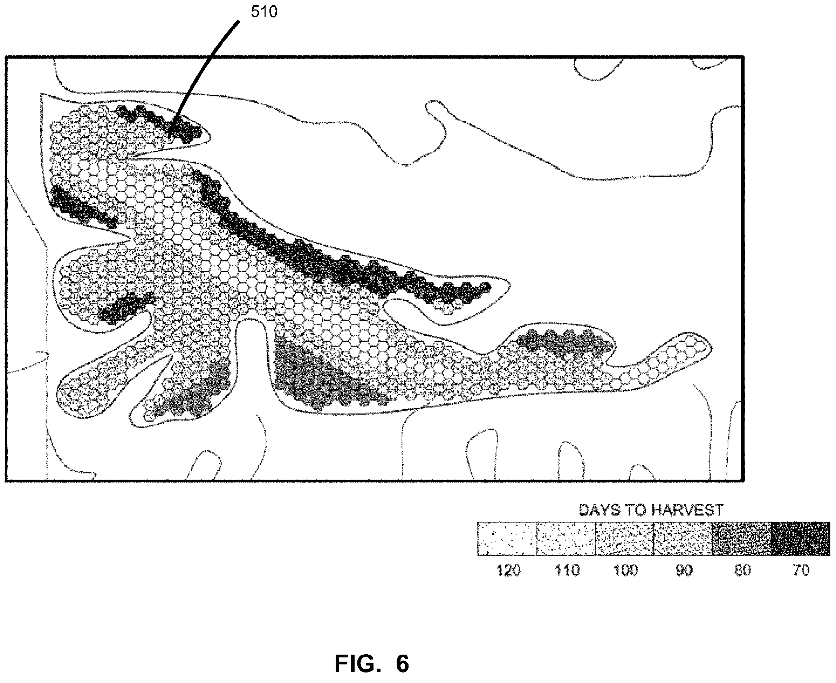

FIG. 6 is a diagram representative of the example plot of land 510 of FIG. 5 gradated with example days until harvest. In some examples, the plot of land view of FIG. 6 may be a graphic representation on a user interface, by the display circuitry 280 of FIG. 2, of intra-field crop readiness to aid user understanding of the operational times per area within the plot of land. The diagram of FIG. 6 may be used to instruct an autonomous vehicle to only operate on certain sections of a field to maximize efficiency of the operation (e.g., yield, time spent, etc.).

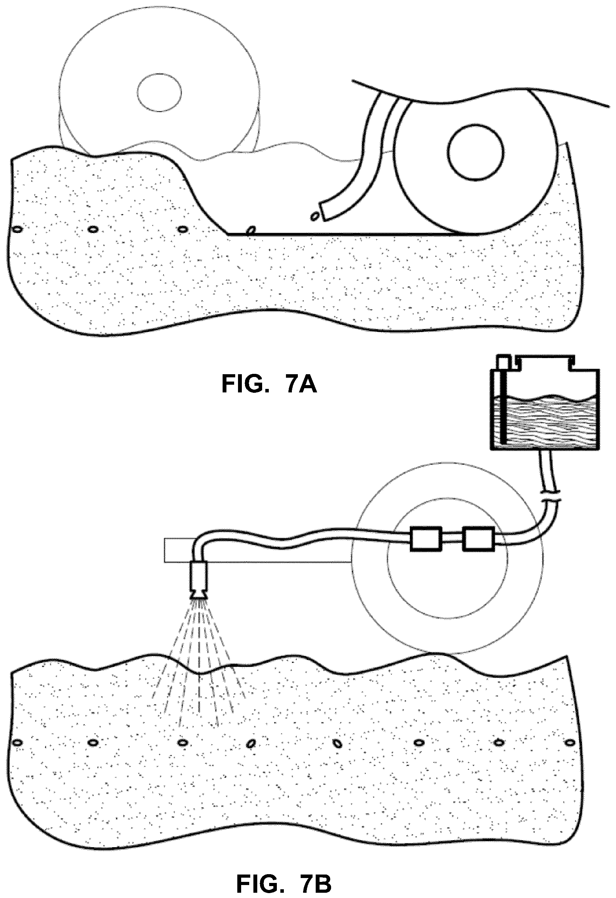

FIGS. 7A and 7B are first and second diagrams of example agricultural operations performed by example agricultural vehicles including example sensors. FIG. 7A is a diagram representative of an example seeding operation. FIG. 7B is a diagram representative of an example spraying operation. FIG. 7A and 7B are not exhaustive of the operations that may be performed, tracked, and logged as agricultural operations for use in model training. Additionally or alternatively, other example operations may include harvesting, watering, weeding, fertilizing, irrigating, etc.

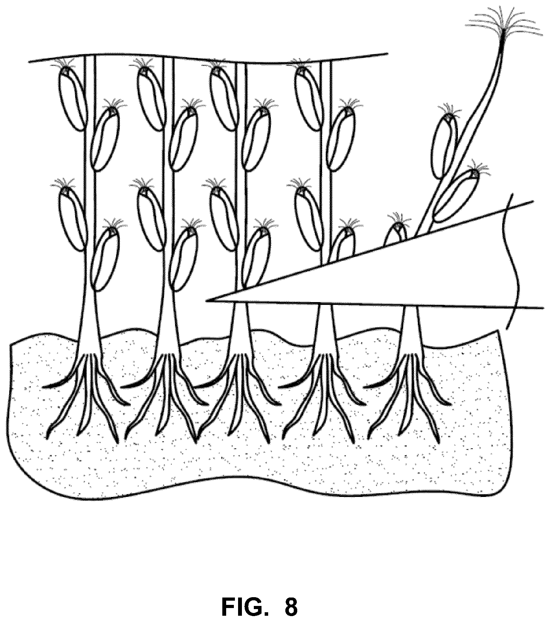

FIG. 8 is a diagram representative of an example harvesting operation. As disclosed in connection to FIG. 7, harvesting may be performed, tracked, and logged as an agricultural operation for use in model training. However, as described in connection to FIGS. 7A-7B, various other example operations may be performed, tracked, and logged for use in model training.

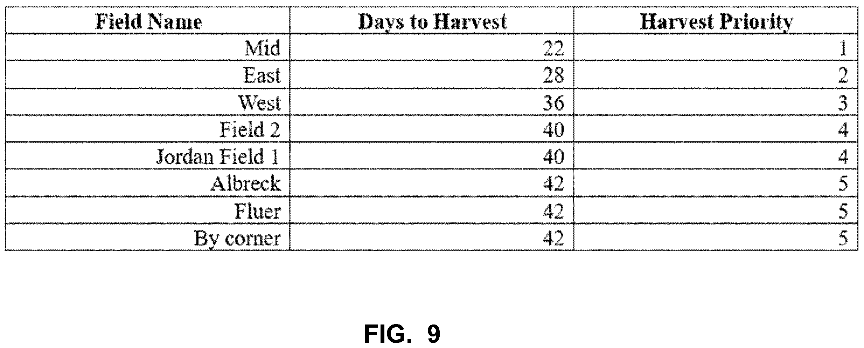

FIG. 9 is a diagram representative of a field list sorted by crop readiness. In some examples, the display circuitry 280 of FIG. 2 may display the list of FIG. 9 to the user. In some examples, the list of FIG. 9 may be used to send instructions to an autonomous fleet concerning the order in which the fleet should perform an operation. While FIG. 9 displays time until harvest, any suitable agricultural or machine operation may be used. As shown in FIG. 9, the field named "Mid" has 22 days until harvest and is the first harvest priority. Mid is contrasted to Albreck, Fluer, and By corner that have 42 days until harvest and are the fifth in the order of harvest priority.

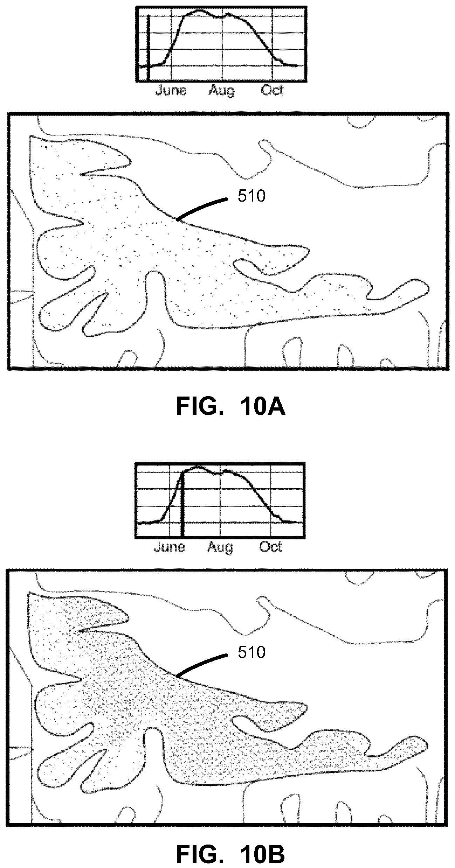

FIGS. 10A and 10B are first and second diagrams representative of example crop growth calculations generated from example satellite images for the target plot of land 510 of FIG. 5. In some examples, the crop growth calculation circuitry 420 of FIG. 4 may generate the diagrams of FIGS. 10A and 10B. The crop growth calculation of FIGS. 10A and 10B may be calculated using NDVI, NDWI, MSAVI, or any other suitable method to determine crop density. FIG. 10A shows the plot of land 510 of FIG. 5 before the month of June as shown by the time slider box above the plot of land diagram. Before the month of June, crop growth for the plot of land 510 is shown to be low, as demonstrated by the sparsity of the dots in the plot of land 510. However, FIG. 10B shows the plot of land 510 at a time between June and August where the crop growth is greater, as demonstrated by more dense dots in the plot of land 510.

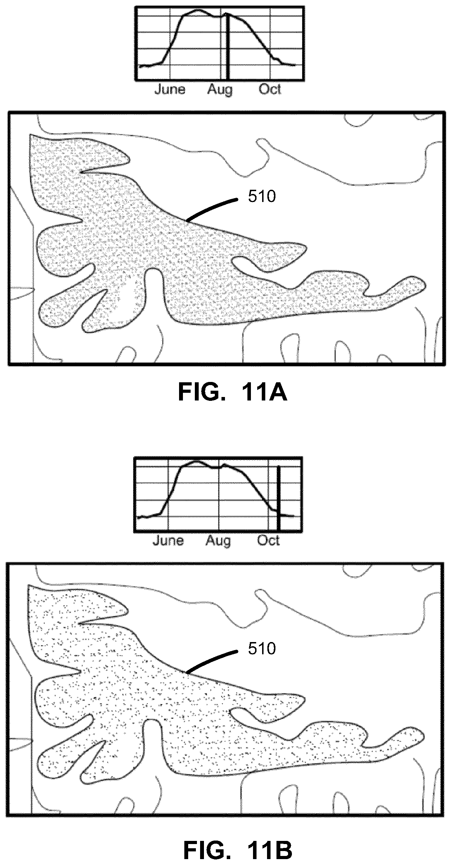

FIGS. 11A and 11B are third and fourth diagrams representative of example crop growth calculations generated from example satellite images of the target plot of land 510 of FIG. 5. In some examples, the crop growth calculation circuitry 420 of FIG. 4 may generate the diagrams of FIGS. 11A and 11B. FIG. 11A shows the plot of land 510 between the months of August and October. As compared to FIG. 10B, the crop growth calculation is greater than between the months of June and August. Likely, between August and October is when the server 130 will recommend to harvest (or other machine operation) the plot of land 510. As shown in FIG. 11B, the crop growth calculation decreases (i.e., the density of the crops decreases or the crops undergo senescence) after the month of October.

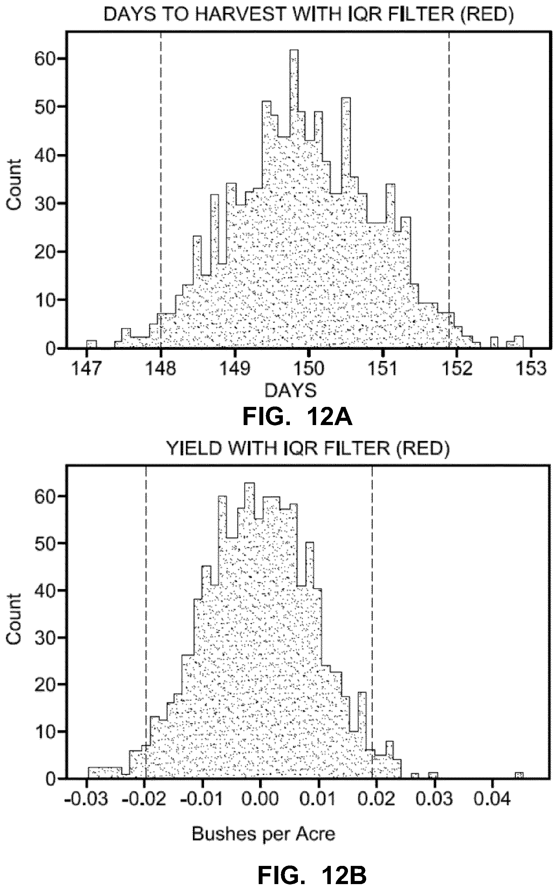

FIGS. 12A and 12B are first and second diagrams representative of examples of outlier filtering of the agricultural operation data. On either side of the dashed lines of FIG. 12A, farmer decisions leading to lower counts are removed based on calculated historical farmer decision probability. By utilizing historical machine sensor data collected from the vehicles, decision probability is calculated to determine whether a given decision by a farmer and associated crop count is anomalous for a plot of land and should be removed. FIG. 12B is the result of the outlier removal as it shows that the anomalous data points are removed. As shown in the example of FIG. 12B, the outlier removal was performed using the IQR technique described above.

While an example manner of implementing the server 130 of FIG. 1 is illustrated in FIG. 2, one or more of the elements, processes, and/or devices illustrated in FIG. 2 may be combined, divided, re-arranged, omitted, eliminated, and/or implemented in any other way. Further, the database interface circuitry 210, the agricultural processing circuitry 220, the geospatial processing circuitry 230, the combination circuitry 240, the machine learning training circuitry 250, the inference circuitry 260, the automation signaling circuitry 270, the display circuitry 280, and/or, more generally, the example server circuitry 130 of FIG. 2, may be implemented by hardware alone or by hardware in combination with software and/or firmware. Thus, for example, any of the database interface circuitry 210, the agricultural processing circuitry 220, the geospatial processing circuitry 230, the combination circuitry 240, the machine learning training circuitry 250, the inference circuitry 260, the automation signaling circuitry 270, the display circuitry 280, and/or, more generally, the example server circuitry 130 of FIG. 2, could be implemented by programmable circuitry in combination with machine-readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example server 130 of FIG. 2 may include one or more elements, processes, and/or devices in addition to, or instead of, those illustrated in FIG. 2, and/or may include more than one of any or all of the illustrated elements, processes and devices.

Flowcharts representative of example machine-readable instructions, which may be executed by programmable circuitry to implement and/or instantiate the server 130 of FIG. 2 and/or representative of example operations which may be performed by programmable circuitry to implement and/or instantiate the server 130 of FIG. 2, are shown in FIGS. 13-15. The machine-readable instructions may be one or more executable programs or portion(s) of one or more executable programs for execution by programmable circuitry such as the programmable circuitry 1612 shown in the example processor platform 1600 discussed below in connection with FIG. 16 and/or may be one or more function(s) or portion(s) of functions to be performed by the example programmable circuitry (e.g., an FPGA) discussed below in connection with FIGS. 17 and/or 18. In some examples, the machine-readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine-readable storage medium such as cache memory, a magneticstorage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, nonvolatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine-readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine-readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 13-15, many other methods of implementing the example server 130 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine-readable instructions described herein may be stored in one or more of a compressed format, an encrypted format, a fragmented format, a compiled format, an executable format, a packaged format, etc. Machine-readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine-readable instructions may be fragmented and stored on one or more storage devices, disks and/or computing devices (e.g., servers) located at the same or different locations of a network or collection of networks (e.g., in the cloud, in edge devices, etc.). The machine-readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine-readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine-readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine-readable instructions may need to be configured (e.g., settings stored, data input, network addresses recorded, etc.) before the machine-readable instructions and/or the corresponding program(s) can be executed in whole or in part. Thus, machine-readable, computer readable and/or machine-readable media, as used herein, may include instructions and/or program(s) regardless of the particular format or state of the machine-readable instructions and/or program(s).

The machine-readable instructions described herein can be represented by any past, present, or future instruction language, scripting language, programming language, etc. For example, the machine-readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 13-15 may be implemented using executable instructions (e.g., computer readable and/or machine-readable instructions) stored on one or more non-transitory computer readable and/or machine-readable media. As used herein, the terms non-transitory computer readable medium, non-transitory computer readable storage medium, non-transitory machine-readable medium, and/or non-transitory machine-readable storage medium are expressly defined to include any type of computer readable storage device and/or storage disk and to exclude propagating signals and to exclude transmission media. Examples of such non-transitory computer readable medium, non-transitory computer readable storage medium, non-transitory machine-readable medium, and/or non-transitory machine-readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine-readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine-readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine-readable instructions, etc., and/or manufactured to execute computer-readable instructions, machine-readable instructions, etc.

FIG. 13 is a flowchart representative of example machine-readable instructions and/or example operations 1300 that may be executed, instantiated, and/or performed by programmable circuitry to generate a proposed time to perform an agricultural operation. The example machine-readable instructions and/or the example operations 1300 of FIG. 13 begin in the training phase 1302 where the machine learning model is trained.

At block 1304 of the training phase 1302, the agricultural processing circuitry 220 accesses agricultural operation data (e.g., farming data 350) from the database 140. The process continues to block 1306 where the agricultural processing circuitry 220 processes the agricultural operation data. Further detailed in FIG. 14, the agricultural processing circuitry 220 filters farming data, interpolates sensor data, synthesizes sensor data into result data, and saves data to the database 140.

At block 1308, the geospatial processing circuitry 230 accesses geospatial data (e.g., condition data 450) from the database 140. At block 1310, the geospatial processing circuitry 230 processes the geospatial data. Further detailed in FIG. 15, the geospatial processing circuitry 230 filters satellite data, calculates crop growth, removes outliers, and saves data to the database 140.

Then, at block 1312, the combination circuitry 240 combines the agricultural operation and geospatial data based on a geographic and temporal similarity. In this way, geospatial and agricultural operation data is associated with plots of land. For example, an agricultural operation performed at a farm on a date can be correlated with a known rainfall and crop growth calculated at that farm over a period of time leading up to the agricultural operation being performed. In this way, many variables (e.g., crop growth, crop moisture, crop prices, etc.) at a known location can be correlated with a farmer decision to perform an agricultural operation at that known location (e.g., spraying fertilizer, spraying insecticide, harvesting a crop, etc.). The combination circuitry 240 stacks training data into a timeseries of data from across the growing season before a farmer decision is made.

After the data is combined, at block 1314, the machine learning model is trained by the machine learning training circuitry 250. The machine learning training circuitry 250 trains the model to generate a proposed time to perform an agricultural operation. The model trains to predict a target time to perform an agricultural operation based on various (e.g., millions) of historical customer decisions and remote sensing data from the model training dataset. In some examples, the training of the model uses the timeseries of training data from the combination circuitry 240 to learn how the geospatial data from around a similar time as the farmer decision for a particular machine operation may have impacted the farmer (e.g., the training of the model analyzes the progress of crop growth from satellite imagery, amount of rain, temperature, etc., to determine how these factors impacted the farmer's decision to perform a particular operation).

After the training of the model, the process continues into the inference phase 1316 where, at block 1318, the inference circuitry 260 accesses relevant agricultural and geospatial conditions corresponding to a target plot of land. In some examples, the user may choose a target plot of land and/or several conditions to receive a proposed time from the trained model.

After a target plot of land is selected, at block 1320, the inference circuitry 260 generates a proposed time to perform an agricultural operation at the target plot of land. In some examples, a proposed time is generated by the model, where the model is put into an application programming interface (API) (e.g., a REST API) to generate a prediction of when to perform an operation for a plot of land based on when a user would make a decision to perform the operation.

Then, at block 1322, the automation signaling circuitry 270 may direct the vehicle to perform an autonomous operation of the target agricultural operation. In some example, the automation signaling circuitry may, additionally or alternatively, signal to the user that the vehicle may perform the target agricultural operation.

Last in this example, at block 1324, the display circuitry 280 provides the proposed time to perform an agricultural operation for the target plot of land to a third party. The third party may be the farmer, a dealer, a user, an analyst, an agronomist, or any other suitable user. After the proposed time is provided to a third party, the process 1300 ends.

FIG. 14 is a flowchart representative of example machine-readable instructions and/or example operations 1306 that may be executed, instantiated, and/or performed by programmable circuitry to process agricultural operation data. The example machine-readable instructions and/or the example operations 1306 of FIG. 13 begins at block 1410 where the filter circuitry 310 removes bad crop cycle duration data from the agricultural operation data. Then, at block 1420, the filter circuitry 310 removes data collected outside of the expected crop season. At block 1430, the filter circuitry 310 removes data associated with bad sensor readings. At block 1440, the filter circuitry 310 removes data outside of known plots of land. The filter circuitry 310 may perform the functions of blocks 1410-1440 utilizing an inter-quartile range technique, as described above. Additionally or alternatively, the filter circuitry 310 may utilize any suitable technique to perform the functions of blocks 1410-1440.

After the data is filtered by the filter circuitry 310, at block 1450, the interpolation circuitry 320 interpolates sensor data. In some examples, missing data may be filled where there are small gaps utilizing rolling average or forward filling over a known time and geographic area, as described above.

At block 1460, the enhancement circuitry 330 and/or the geographic correction circuitry 340 may synthesize the sensor data into result data. In some examples, the synthesis of sensor data into result data may be instantiated by the enhancement circuitry 330 to combine sensor readings (e.g., sensor readings collected by the data store 170 of FIG. 1) into useful features (e.g., raw strike plate force from grain interpolated into yield value). Additionally or alternatively, in some examples, the synthesis of sensor data into result data may be instantiated by the geographic correction circuitry 340 to transform raw machine sensor data (e.g., data collected by data store 170 of FIG. 1) to ensure that the raw machine sensor data is spatially and temporally aligned with other sensor data to ensure accuracy.

Then, at block 1470, agricultural processing circuitry 220 stores the data into the database 140. After the storage of the data, the process 1306 ends and control returns to block 1308 of FIG. 13.

FIG. 15 is a flowchart representative of example machine-readable instructions and/or example operations 1310 that may be executed, instantiated, and/or performed by programmable circuitry to process geospatial data. The example machine-readable instructions and/or the example operations 1310 of FIG. 15 begins at block 1510 where the bad image data is removed by the image filter circuitry 410. The image filter circuitry 410 may remove bad image data. In some examples, the image filter circuitry 410 filters out cloudy images or bad quality images from remote sensory imagery.

At block 1520, the crop growth calculation circuitry 420 may calculate crop growth data from image data. As disclosed above, several techniques of crop grown calculation (e.g., NDVI, NDWI, MSAVI, etc.) may be utilized.

Then, control proceeds to block 1530 where the outlier removal circuitry 430 may remove outliers of the crop growth calculation. As described above, an IQR technique may be utilized to remove outliers.

Then, control proceeds to block 1540 where the geospatial processing circuitry 230 stores processed geospatial data in the database 140. After storage, the process 1310 ends and control returns to block 1312 of FIG. 13.

FIG. 16 is a block diagram of an example programmable circuitry platform 1600 structured to execute and/or instantiate the example machine-readable instructions and/or the example operations of FIGS. 13-15 to implement the server circuitry of FIG. 2. The programmable circuitry platform 1600 can be, for example, a server, a personal computer, a workstation, a self-learning machine (e.g., a neural network), a mobile device (e.g., a cell phone, a smart phone, a tablet such as an iPad™), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing and/or electronic device.

The programmable circuitry platform 1600 of the illustrated example includes programmable circuitry 1612. The programmable circuitry 1612 of the illustrated example is hardware. For example, the programmable circuitry 1612 can be implemented by one or more integrated circuits, logic circuits, FPGAs, microprocessors, CPUs, GPUs, DSPs, and/or microcontrollers from any desired family or manufacturer. The programmable circuitry 1612 may be implemented by one or more semiconductor based (e.g., silicon based) devices. In this example, the programmable circuitry 1612 implements the database interface circuitry 210, the agricultural processing circuitry 220, the geospatial processing circuitry 230, the combination circuitry 240, the machine learning training circuitry 250, the inference circuitry 260, the automation signaling circuitry 270, and the display circuitry 280.

The programmable circuitry 1612 of the illustrated example includes a local memory 1613 (e.g., a cache, registers, etc.). The programmable circuitry 1612 of the illustrated example is in communication with main memory 1614, 1616, which includes a volatile memory 1614 and a non-volatile memory 1616, by a bus 1618. The volatile memory 1614 may be implemented by Synchronous Dynamic Random Access Memory (SDRAM), Dynamic Random Access Memory (DRAM), RAMBUS® Dynamic Random Access Memory (RDRAM®), and/or any other type of RAM device. The non-volatile memory 1616 may be implemented by flash memory and/or any other desired type of memory device. Access to the main memory 1614, 1616 of the illustrated example is controlled by a memory controller 1617. In some examples, the memory controller 1617 may be implemented by one or more integrated circuits, logic circuits, microcontrollers from any desired family or manufacturer, or any other type of circuitry to manage the flow of data going to and from the main memory 1614, 1616.

The programmable circuitry platform 1600 of the illustrated example also includes interface circuitry 1620. The interface circuitry 1620 may be implemented by hardware in accordance with any type of interface standard, such as an Ethernet interface, a universal serial bus (USB) interface, a Bluetooth® interface, a near field communication (NFC) interface, a Peripheral Component Interconnect (PCI) interface, and/or a Peripheral Component Interconnect Express (PCIe) interface.

In the illustrated example, one or more input devices 1622 are connected to the interface circuitry 1620. The input device(s) 1622 permit(s) a user (e.g., a human user, a machine user, etc.) to enter data and/or commands into the programmable circuitry 1612. The input device(s) 1622 can be implemented by, for example, an audio sensor, a microphone, a camera (still or video), a keyboard, a button, a mouse, a touchscreen, a trackpad, a trackball, an isopoint device, and/or a voice recognition system.

One or more output devices 1624 are also connected to the interface circuitry 1620 of the illustrated example. The output device(s) 1624 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 1620 of the illustrated example, thus, typically includes a graphics driver card, a graphics driver chip, and/or graphics processor circuitry such as a GPU.

The interface circuitry 1620 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1626. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 1600 of the illustrated example also includes one or more mass storage discs or devices 1628 to store firmware, software, and/or data. Examples of such mass storage discs or devices 1628 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine-readable instructions 1632, which may be implemented by the machine-readable instructions of FIGS. 13-15, may be stored in the mass storage device 1628, in the volatile memory 1614, in the non-volatile memory 1616, and/or on at least one non-transitory computer readable storage medium such as a CD or DVD which may be removable.

FIG. 17 is a block diagram of an example implementation of the programmable circuitry 1612 of FIG. 16. In this example, the programmable circuitry 1612 of FIG. 16 is implemented by a microprocessor 1700. For example, the microprocessor 1700 may be a general-purpose microprocessor (e.g., general-purpose microprocessor circuitry). The microprocessor 1700 executes some or all of the machine-readable instructions of the flowcharts of FIGS. 13-15 to effectively instantiate the circuitry of FIG. 2 as logic circuits to perform operations corresponding to those machine-readable instructions. In some such examples, the circuitry of FIG. 2 is instantiated by the hardware circuits of the microprocessor 1700 in combination with the machine-readable instructions. For example, the microprocessor 1700 may be implemented by multi-core hardware circuitry such as a CPU, a DSP, a GPU, an XPU, etc. Although it may include any number of example cores 1702 (e.g., 1 core), the microprocessor 1700 of this example is a multi-core semiconductor device including N cores. The cores 1702 of the microprocessor 1700 may operate independently or may cooperate to execute machine-readable instructions. For example, machine code corresponding to a firmware program, an embedded software program, or a software program may be executed by one of the cores 1702 or may be executed by multiple ones of the cores 1702 at the same or different times. In some examples, the machine code corresponding to the firmware program, the embedded software program, or the software program is split into threads and executed in parallel by two or more of the cores 1702. The software program may correspond to a portion or all of the machine-readable instructions and/or operations represented by the flowcharts of FIGS. 13-15.

The cores 1702 may communicate by a first example bus 1704. In some examples, the first bus 1704 may be implemented by a communication bus to effectuate communication associated with one(s) of the cores 1702. For example, the first bus 1704 may be implemented by at least one of an Inter-Integrated Circuit (I2C) bus, a Serial Peripheral Interface (SPI) bus, a PCI bus, or a PCIe bus. Additionally or alternatively, the first bus 1704 may be implemented by any other type of computing or electrical bus. The cores 1702 may obtain data, instructions, and/or signals from one or more external devices by example interface circuitry 1706. The cores 1702 may output data, instructions, and/or signals to the one or more external devices by the interface circuitry 1706. Although the cores 1702 of this example include example local memory 1720 (e.g., Level 1 (L1) cache that may be split into an L1 data cache and an L1 instruction cache), the microprocessor 1700 also includes example shared memory 1710 that may be shared by the cores (e.g., Level 2 (L2 cache)) for high-speed access to data and/or instructions. Data and/or instructions may be transferred (e.g., shared) by writing to and/or reading from the shared memory 1710. The local memory 1720 of each of the cores 1702 and the shared memory 1710 may be part of a hierarchy of storage devices including multiple levels of cache memory and the main memory (e.g., the main memory 1614, 1616 of FIG. 16). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1702 may be referred to as a CPU, DSP, GPU, etc., or any other type of hardware circuitry. Each core 1702 includes control unit circuitry 1714, arithmetic and logic (AL) circuitry (sometimes referred to as an ALU) 1716, a plurality of registers 1718, the local memory 1720, and a second example bus 1722. Other structures may be present. For example, each core 1702 may include vector unit circuitry, single instruction multiple data (SIMD) unit circuitry, load/store unit (LSU) circuitry, branch/jump unit circuitry, floating-point unit (FPU) circuitry, etc. The control unit circuitry 1714 includes semiconductor-based circuits structured to control (e.g., coordinate) data movement within the corresponding core 1702. The AL circuitry 1716 includes semiconductor-based circuits structured to perform one or more mathematic and/or logic operations on the data within the corresponding core 1702. The AL circuitry 1716 of some examples performs integer based operations. In other examples, the AL circuitry 1716 also performs floating-point operations. In yet other examples, the AL circuitry 1716 may include first AL circuitry that performs integer-based operations and second AL circuitry that performs floating-point operations. In some examples, the AL circuitry 1716 may be referred to as an Arithmetic Logic Unit (ALU).

The registers 1718 are semiconductor-based structures to store data and/or instructions such as results of one or more of the operations performed by the AL circuitry 1716 of the corresponding core 1702. For example, the registers 1718 may include vector register(s), SIMD register(s), general-purpose register(s), flag register(s), segment register(s), machine-specific register(s), instruction pointer register(s), control register(s), debug register(s), memory management register(s), machine check register(s), etc. The registers 1718 may be arranged in a bank as shown in FIG. 17. Alternatively, the registers 1718 may be organized in any other arrangement, format, or structure, such as by being distributed throughout the core 1702 to shorten access time. The second bus 1722 may be implemented by at least one of an I2C bus, a SPI bus, a PCI bus, or a PCIe bus.

Each core 1702 and/or, more generally, the microprocessor 1700 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1700 is a semiconductor device fabricated to include many transistors interconnected to implement the structures described above in one or more integrated circuits (ICs) contained in one or more packages.

The microprocessor 1700 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 1700, in the same chip package as the microprocessor 1700 and/or in one or more separate packages from the microprocessor 1700.

FIG. 18 is a block diagram of another example implementation of the programmable circuitry 1612 of FIG. 16. In this example, the programmable circuitry 1612 is implemented by FPGA circuitry 1800. For example, the FPGA circuitry 1800 may be implemented by an FPGA. The FPGA circuitry 1800 can be used, for example, to perform operations that could otherwise be performed by the example microprocessor 1700 of FIG. 17 executing corresponding machine-readable instructions. However, once configured, the FPGA circuitry 1800 instantiates the operations and/or functions corresponding to the machine-readable instructions in hardware and, thus, can often execute the operations/functions faster than they could be performed by a general-purpose microprocessor executing the corresponding software.

More specifically, in contrast to the microprocessor 1700 of FIG. 17 described above (which is a general purpose device that may be programmed to execute some or all of the machine-readable instructions represented by the flowchart(s) of FIGS. 13-15 but whose interconnections and logic circuitry are fixed once fabricated), the FPGA circuitry 1800 of the example of FIG. 18 includes interconnections and logic circuitry that may be configured, structured, programmed, and/or interconnected in different ways after fabrication to instantiate, for example, some or all of the operations/functions corresponding to the machine-readable instructions represented by the flowchart(s) of FIGS. 13-15. In particular, the FPGA circuitry 1800 may be thought of as an array of logic gates, interconnections, and switches. The switches can be programmed to change how the logic gates are interconnected by the interconnections, effectively forming one or more dedicated logic circuits (unless and until the FPGA circuitry 1800 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 13-15. As such, the FPGA circuitry 1800 may be configured and/or structured to effectively instantiate some or all of the operations/functions corresponding to the machine-readable instructions of the flowchart(s) of FIGS. 13-15 as dedicated logic circuits to perform the operations/functions corresponding to those software instructions in a dedicated manner analogous to an ASIC. Therefore, the FPGA circuitry 1800 may perform the operations/functions corresponding to the some or all of the machine-readable instructions of FIGS. 13-15 faster than the general-purpose microprocessor can execute the same.

In the example of FIG. 18, the FPGA circuitry 1800 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1800 of FIG. 18 may access and/or load the binary file to cause the FPGA circuitry 1800 of FIG. 18 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1800 of FIG. 18 to cause configuration and/or structuring of the FPGA circuitry 1800 of FIG. 18, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1800 of FIG. 18 may access and/or load the binary file to cause the FPGA circuitry 1800 of FIG. 18 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1800 of FIG. 18 to cause configuration and/or structuring of the FPGA circuitry 1800 of FIG. 18, or portion(s) thereof.

The FPGA circuitry 1800 of FIG. 18, includes example input/output (I/O) circuitry 1802 to obtain and/or output data to/from example configuration circuitry 1804 and/or external hardware 1806. For example, the configuration circuitry 1804 may be implemented by interface circuitry that may obtain a binary file, which may be implemented by a bit stream, data, and/or machine-readable instructions, to configure the FPGA circuitry 1800, or portion(s) thereof. In some such examples, the configuration circuitry 1804 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1806 may be implemented by external hardware circuitry. For example, the external hardware 1806 may be implemented by the microprocessor 1700 of FIG. 17.

The FPGA circuitry 1800 also includes an array of example logic gate circuitry 1808, a plurality of example configurable interconnections 1810, and example storage circuitry 1812. The logic gate circuitry 1808 and the configurable interconnections 1810 are configurable to instantiate one or more operations/functions that may correspond to at least some of the machine-readable instructions of FIGS. 13-15 and/or other desired operations. The logic gate circuitry 1808 shown in FIG. 18 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1808 to enable configuration of the electrical structures and/or the logic gates to form circuits to perform desired operations/functions. The logic gate circuitry 1808 may include other electrical structures such as look-up tables (LUTs), registers (e.g., flip-flops or latches), multiplexers, etc.

The configurable interconnections 1810 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1808 to program desired logic circuits.

The storage circuitry 1812 of the illustrated example is structured to store result(s) of the one or more of the operations performed by corresponding logic gates. The storage circuitry 1812 may be implemented by registers or the like. In the illustrated example, the storage circuitry 1812 is distributed amongst the logic gate circuitry 1808 to facilitate access and increase execution speed.

The example FPGA circuitry 1800 of FIG. 18 also includes example dedicated operations circuitry 1814. In this example, the dedicated operations circuitry 1814 includes special purpose circuitry 1816 that may be invoked to implement commonly used functions to avoid the need to program those functions in the field. Examples of such special purpose circuitry 1816 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1800 may also include example general purpose programmable circuitry 1818 such as an example CPU 1820 and/or an example DSP 1822. Other general purpose programmable circuitry 1818 may additionally or alternatively be present such as a GPU, an XPU, etc., that can be programmed to perform other operations.

Although FIGS. 17 and 18 illustrate two example implementations of the programmable circuitry 1612 of FIG. 16, many other approaches are contemplated. For example, FPGA circuitry may include an on-board CPU, such as one or more of the example CPU 1820 of FIG. 17. Therefore, the programmable circuitry 1612 of FIG. 16 may additionally be implemented by combining at least the example microprocessor 1700 of FIG. 17 and the example FPGA circuitry 1800 of FIG. 18. In some such hybrid examples, one or more cores 1702 of FIG. 17 may execute a first portion of the machine-readable instructions represented by the flowchart(s) of FIGS. 13-15 to perform first operation(s)/function(s), the FPGA circuitry 1800 of FIG. 18 may be configured and/or structured to perform second operation(s)/function(s) corresponding to a second portion of the machine-readable instructions represented by the flowcharts of FIG. 13-15, and/or an ASIC may be configured and/or structured to perform third operation(s)/function(s) corresponding to a third portion of the machine-readable instructions represented by the flowcharts of FIGS. 13-15.

It should be understood that some or all of the circuitry of FIG. 2 may, thus, be instantiated at the same or different times. For example, same and/or different portion(s) of the microprocessor 1700 of FIG. 17 may be programmed to execute portion(s) of machine-readable instructions at the same and/or different times. In some examples, same and/or different portion(s) of the FPGA circuitry 1800 of FIG. 18 may be configured and/or structured to perform operations/functions corresponding to portion(s) of machine-readable instructions at the same and/or different times.

In some examples, some or all of the circuitry of FIG. 2 may be instantiated, for example, in one or more threads executing concurrently and/or in series. For example, the microprocessor 1700 of FIG. 17 may execute machine-readable instructions in one or more threads executing concurrently and/or in series. In some examples, the FPGA circuitry 1800 of FIG. 18 may be configured and/or structured to carry out operations/functions concurrently and/or in series. Moreover, in some examples, some or all of the circuitry of FIG. 2 may be implemented within one or more virtual machines and/or containers executing on the microprocessor 1700 of FIG. 17.

In some examples, the programmable circuitry 1612 of FIG. 16 may be in one or more packages. For example, the microprocessor 1700 of FIG. 17 and/or the FPGA circuitry 1800 of FIG. 18 may be in one or more packages. In some examples, an XPU may be implemented by the programmable circuitry 1612 of FIG. 16, which may be in one or more packages. For example, the XPU may include a CPU (e.g., the microprocessor 1700 of FIG. 17, the CPU 1820 of FIG. 18, etc.) in one package, a DSP (e.g., the DSP 1822 of FIG. 18) in another package, a GPU in yet another package, and an FPGA (e.g., the FPGA circuitry 1800 of FIG. 18) in still yet another package.

A block diagram illustrating an example software distribution platform 1905 to distribute software such as the example machine-readable instructions 1632 of FIG. 16 to other hardware devices (e.g., hardware devices owned and/or operated by third parties from the owner and/or operator of the software distribution platform) is illustrated in FIG. 19. The example software distribution platform 1905 may be implemented by any computer server, data facility, cloud service, etc., capable of storing and transmitting software to other computing devices. The third parties may be customers of the entity owning and/or operating the software distribution platform 1905. For example, the entity that owns and/or operates the software distribution platform 1905 may be a developer, a seller, and/or a licensor of software such as the example machine-readable instructions 1632 of FIG. 16. The third parties may be consumers, users, retailers, OEMs, etc., who purchase and/or license the software for use and/or re-sale and/or sub-licensing. In the illustrated example, the software distribution platform 1905 includes one or more servers and one or more storage devices. The storage devices store the machine-readable instructions 1632, which may correspond to the example machine-readable instructions of FIGS. 13-15, as described above. The one or more servers of the example software distribution platform 1905 are in communication with an example network 1910, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third-party payment entity. The servers enable purchasers and/or licensors to download the machine-readable instructions 1632 from the software distribution platform 1905. For example, the software, which may correspond to the example machine-readable instructions of FIG. 13-15, may be downloaded to the example programmable circuitry platform 1600, which is to execute the machine-readable instructions 1632 to implement the server circuitry. In some examples, one or more servers of the software distribution platform 1905 periodically offer, transmit, and/or force updates to the software (e.g., the example machine-readable instructions 1632 of FIG. 16) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that generate a proposed time for agricultural operation. Disclosed systems, apparatus, articles of manufacture, and methods improve the efficiency of using a computing device by generating a proposed time for an agricultural operation. Disclosed systems, apparatus, articles of manufacture, and methods are accordingly directed to one or more improvement(s) in the operation of a machine such as a computer or other electronic and/or mechanical device.

Example methods, apparatus, systems, and articles of manufacture to determine performance of agricultural operations are disclosed herein. Further examples and combinations thereof include the following:

Example 1 includes a method to determine a time to perform an agricultural operation, the method comprising obtaining agricultural operation data, the agricultural operation data representing farmer decisions to perform agricultural operations, filtering the agricultural operation data to remove data associated with crop growing cycles outside an expected crop growing cycle duration based on a respective type of the crop, the filtering to create filtered agricultural operation data, accessing geospatial data, the geospatial data including at least climate data and satellite imaging data, combining the filtered agricultural operation data with the geospatial data based on a geographic and time similarity to create a training data set representing historic farmer decisions and corresponding agricultural and geospatial conditions, and training a machine learning model to generate a proposed time to perform an agricultural operation based on existing agricultural and geospatial conditions.

Example 2 includes the method of example 1, further including accessing the existing agricultural and geospatial conditions corresponding to a target plot of land, and executing the machine learning model to generate the proposed time to perform the agricultural operation at the target plot of land.

Example 3 includes the method of example 2, further including directing an automated agricultural vehicle to perform the agricultural operation at the target plot of land.

Example 4 includes the method of example 2 or example 3, further including providing, to a third party, a name of the agricultural operation, the proposed time to perform the agricultural operation, and a location of the target plot of land.

Example 5 includes the method of example 4, wherein the third party is at least one of an equipment dealer, a farm supplier, or an agronomist.

Example 6 includes the method of any one of examples 2 to 5, wherein the target plot of land includes at least one of a plurality of plots of land, or a plurality of subplots of land, wherein a first agricultural operation and first proposed time is generated for a first plot of land and a second agricultural operation and second proposed time is generated for a second plot of land.

Example 7 includes the method of example 6, further including displaying the plurality of expected times to perform the agricultural operation by overlaying colored sections on an image of the plurality of plots of lands, the colored sections including colors to represent the plurality of expected times.

Example 8 includes the method of example 7, wherein displaying the plurality of expected times includes at least one of a histogram of days until the agricultural operation, a priority ranking of the plurality of plots of land, colored sections overlayed on a plurality of subplots of land of a plot of land, or a chart of the plurality of expected times.

Example 9 includes the method of any one of examples 1 to 8, wherein agricultural operation data include at least one of a time of the agricultural operation, a location of the agricultural operation, a type of agricultural operation, a type of crop, or a result of the agricultural operation.

Example 10 includes the method of example 9, wherein the type of agricultural operation includes at least one of planting a crop, applying a fertilizer, applying a pesticide, applying a fungicide, harvesting a crop, or performing a suitable agricultural operation.

Example 11 includes the method of example 9, wherein the result of the agricultural operation includes sensor data collected by a sensor on an agricultural vehicle, the sensor data including a measured quality of the agricultural operation at the time and the location.

Example 12 includes the method of example 11, wherein the filtering of the agricultural operation data further includes filtering the agricultural operation data associated with sensor data outside expected sensor ranges or expected sensor variation over time.

Example 13 includes the method of example 11, further including enhancing the agricultural operation data by synthesizing a result of the agricultural operation by combining sensor data from one or more sensors of the agricultural vehicle.

Example 14 includes the method of any one of examples 1 to 13, further including enhancing the agricultural operation data by filling in a gap in the agricultural operation data with a rolling average, the gap representing missing data across a time and a geographical area.

Example 15 includes the method of any one of examples 1 to 14, wherein filtering the agricultural operation data further includes removing agricultural operation data associated with a geographic area outside a known plot of land.

Example 16 includes the method of any one of examples 1 to 15, wherein filtering the agricultural operation data further includes removing agricultural operation data associated with a time outside of expected crop growing seasons.

Example 17 includes the method of any one of examples 1 to 16, wherein the geospatial data additionally include at least one of soil data or agronomic data.

Example 18 includes the method of example 17, wherein the agronomic data include at least one of machine health data, farming regulation data, silage capacity data, crop market price data, crop input cost data, available labor data, available equipment data, crop insurance data, or operation cost data.

Example 19 includes the method of any one of examples 1 to 18, wherein the satellited imaging data include at least one of a Normalized Difference Vegetation Index (NDVI), a Normalized Difference Water Index (NDWI), or a Modified Soil Adjusted Vegetation Index (MSAVI).

Example 20 includes the method of any one of examples 1 to 19, wherein the combined filtered agricultural operation and geospatial data are stored remotely in a cloud database.

Example 21 includes an apparatus to determine a time to perform an agricultural operation, the apparatus comprising display circuitry, machine-readable instructions, and programmable circuitry to at least one of instantiate or execute the machine-readable instructions to obtain agricultural operation data, the agricultural operation data representing farmer decisions to perform agricultural operations, filter the agricultural operation data to remove data associated with crop growing cycles outside an expected crop growing cycle duration based on a respective type of the crop, the filtering to create filtered agricultural operation data, access geospatial data, the geospatial data including at least climate data and satellite imaging data, combine the filtered agricultural operation data with the geospatial data based on a geographic and time similarity to create a training data set representing historic farmer decisions and corresponding agricultural and geospatial conditions, and train a machine learning model to generate a proposed time to perform an agricultural operation based on existing agricultural and geospatial conditions.

Example 22 includes the apparatus of example 21, wherein the programmable circuitry is to access the existing agricultural and geospatial conditions corresponding to a target plot of land, and executing the machine learning model to generate the proposed time to perform the agricultural operation at the target plot of land.

Example 23 includes the apparatus of example 22, wherein the programmable circuitry is to direct an automated agricultural vehicle to perform the agricultural operation at the target plot of land.

Example 24 includes the apparatus of example 22, wherein the programmable circuitry is to provide to a third party a name of the agricultural operation, the proposed time to perform the agricultural operation, and a location of the target plot of land.

Example 25 includes the apparatus of example 24, wherein the third party is at least one of an equipment dealer, a farm supplier, an agronomist, or other suitable personnel.

Example 26 includes the apparatus of example 22, wherein the target plot of land includes at least one of a plurality of plots of land, or a plurality of subplots of land, wherein a first agricultural operation and first proposed time is generated for a first plot of land and a second agricultural operation and second proposed time is generated for a second plot of land.

Example 27 includes the apparatus of example 26, wherein the programmable circuitry is to display the plurality of expected times to perform the agricultural operation by overlaying colored sections on an image of the plurality of plots of lands, the colored sections including colors to represent the plurality of expected times.

Example 28 includes the apparatus of example 27, wherein the programmable circuitry is to display the plurality of expected times includes at least one of a histogram of days until the agricultural operation, a priority ranking of the plurality of plots of land, colored sections overlayed on a plurality of subplots of land of a plot of land, or a chart of the plurality of expected times.

Example 29 includes the apparatus of any one of examples 21 to 28, wherein agricultural operation data include at least one of a time of the agricultural operation, a location of the agricultural operation, a type of agricultural operation, a type of crop, or a result of the agricultural operation.

Example 30 includes the apparatus of example 29, wherein the type of agricultural operation includes at least one of planting a crop, applying a fertilizer, applying a pesticide, applying a fungicide, harvesting a crop, or performing a suitable agricultural operation.

Example 31 includes the apparatus of example 29, wherein the result of the agricultural operation includes sensor data collected by a sensor on an agricultural vehicle, the sensor data including a measured quality of the agricultural operation at the time and the location.

Example 32 includes the apparatus of example 31, wherein the programmable circuitry is to filter the agricultural operation data by filtering the agricultural operation data associated with sensor data outside expected sensor ranges or expected sensor variation over time.

Example 33 includes the apparatus of example 31, wherein the programmable circuitry is to enhance agricultural operation data by synthesizing a result of the agricultural operation by combining sensor data from one or more sensors of the agricultural vehicle.

Example 34 includes the apparatus of any one of examples 21 to 33, wherein the programmable circuity is to enhance the agricultural operation data by filling in a gap in the agricultural operation data with a rolling average, the gap representing missing data across a time and a geographical area.

Example 35 includes the apparatus of any one of examples 21 to 34, wherein the programmable circuitry is to filter the agricultural operation data by removing agricultural operation data associated with a geographic area outside a known plot of land.

Example 36 includes the apparatus of any one of examples 21 to 35, wherein the programmable circuitry is to filter the agricultural operation data by removing agricultural operation data associated with a time outside of expected crop growing seasons.

Example 37 includes the apparatus of any one of examples 21 to 36, wherein the geospatial data additionally includes at least one of soil data or agronomic data.

Example 38 includes the apparatus of example 37, wherein the agronomic data includes at least one of machine health data, farming regulation data, silage capacity data, crop market price data, crop input cost data, available labor data, available equipment data, crop insurance data, or operation cost data.

Example 39 includes the apparatus of any one of examples 21 to 38, wherein the satellite image data includes at least one of Normalized Difference Vegetation Index (NDVI), a Normalized Difference Water Index (NDWI), or a Modified Soil Adjusted Vegetation Index (MSAVI).

Example 40 includes the apparatus of any one of examples 21 to 39, wherein the combined filtering agricultural operation and geospatial data are stored remotely in a cloud database.

Example 41 includes a non-transitory computer-readable medium comprising instructions which, when executed, cause processor circuitry to obtain agricultural operation data, the agricultural operation data representing farmer decisions to perform agricultural operations, filter the agricultural operation data to remove data associated with crop growing cycles outside an expected crop growing cycle duration based on a respective type of the crop, the filtering to create filtered agricultural operation data, access geospatial data, the geospatial data including at least climate data and satellite imaging data, combine the filtered agricultural operation data with the geospatial data based on a geographic and time similarity to create a training data set representing historic farmer decisions and corresponding agricultural and geospatial conditions, and train a machine learning model to generate a proposed time to perform an agricultural operation based on existing agricultural and geospatial conditions.

Example 42 includes the non-transitory computer-readable medium of example 41, wherein the processor circuitry is to access the existing agricultural and geospatial conditions corresponding to a target plot of land, and executing the machine learning model to generate the proposed time to perform the agricultural operation at the target plot of land.

Example 43 includes the non-transitory computer-readable medium of example 42, wherein the processor circuitry is to direct an automated agricultural vehicle to perform the agricultural operation at the target plot of land.

Example 44 includes the non-transitory computer-readable medium of example 42, wherein the processor circuitry is to provide to a third party the name of the agricultural operation, the proposed time to perform the agricultural operation, and a location of the target plot of land.

Example 45 includes the non-transitory computer-readable medium of example 44, wherein the third party is at least one of an equipment dealer, a farm supplier, an agronomist, or other suitable personnel.

Example 46 includes the non-transitory computer-readable medium of example 42, wherein the target plot of land includes at least one of a plurality of plots of land, or a plurality of subplots of land, wherein a first agricultural operation and first proposed time is generated for a first plot of land and a second agricultural operation and second proposed time is generated for a second plot of land.

Example 47 includes the non-transitory computer-readable medium of example 46, wherein the processor circuitry is to display the plurality of expected times to perform the agricultural operation by overlaying colored sections on an image of the plurality of plots of lands, the colored sections including colors to represent the plurality of expected times.

Example 48 includes the non-transitory computer-readable medium of example 47, wherein the processor circuitry is to display the plurality of expected times includes at least one of a histogram of days until the agricultural operation, a priority ranking of the plurality of plots of land, colored sections overlaid on a plurality of subplots of land of a plot of land, or a chart of the plurality of expected times.

Example 49 includes the non-transitory computer-readable medium of any one of examples 41 to 48, wherein agricultural operation data include at least one of a time of the agricultural operation, a location of the agricultural operation, a type of agricultural operation, a type of crop, or a result of the agricultural operation.

Example 50 includes the non-transitory computer-readable medium of example 49, wherein the type of agricultural operation includes at least one of planting a crop, applying a fertilizer, applying a pesticide, applying a fungicide, harvesting a crop, or performing a suitable agricultural operation.

Example 51 includes the non-transitory computer-readable medium of example 49, wherein the result of the agricultural operation includes sensor data collected by a sensor on an agricultural vehicle, the sensor data including a measured quality of the agricultural operation at the time and the location.

Example 52 includes the non-transitory computer-readable medium of example 51, wherein the processor circuitry is to filter the agricultural operation data by filtering the agricultural operation data associated with sensor data outside expected sensor ranges or expected sensor variation over time.

Example 53 includes the non-transitory computer-readable medium of example 51, wherein the programmable circuitry is to enhance agricultural operation data by synthesizing a result of the agricultural operation by combining sensor data from one or more sensors of the agricultural vehicle.

Example 54 includes the non-transitory computer-readable medium of example 51, wherein the processor circuitry is to enhance agricultural operation data by synthesizing a result of the agricultural operation by combining sensor data from one or more sensors of the agricultural vehicle.

Example 55 includes the non-transitory computer-readable medium of example 51, wherein the processor circuitry is to filter the agricultural operation data by removing agricultural operation data associated with a geographic area outside a known plot of land.

Example 56 includes the non-transitory computer-readable medium of example 51, wherein the processor circuitry is to filter the agricultural operation data by removing agricultural operation data associated with a time outside of expected crop growing seasons.

Example 57 includes the non-transitory computer-readable medium of example 51, wherein the geospatial data additionally includes at least one of soil data or agronomic data.

Example 58 includes the non-transitory computer-readable medium of example 57, wherein the agronomic data includes at least one of machine health data, farming regulation data, silage capacity data, crop market price data, crop input cost data, available labor data, available equipment data, crop insurance data, or operation cost data.

Example 59 includes the non-transitory computer-readable medium of example 51, wherein the satellite image data includes at least one of Normalized Difference Vegetation Index (NDVI), a Normalized Difference Water Index (NDWI), or a Modified Soil Adjusted Vegetation Index (MSAVI).

Example 60 includes the non-transitory computer-readable medium of example 51, wherein the combined filtering agricultural operation and geospatial data are stored remotely in a cloud database.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. A method to determine a time to perform an agricultural operation, the method comprising:

   obtaining agricultural operation data, the agricultural operation data representing farmer decisions to perform agricultural operations;
   filtering the agricultural operation data to remove data associated with crop growing cycles outside an expected crop growing cycle duration based on a respective type of the crop, the filtering to create filtered agricultural operation data;
   accessing geospatial data, the geospatial data including at least climate data and satellite imaging data;
   combining the filtered agricultural operation data with the geospatial data based on a geographic and time similarity to create a training data set representing historic farmer decisions and corresponding agricultural and geospatial conditions; and
   training a machine learning model to generate a proposed time to perform an agricultural operation based on existing agricultural and geospatial conditions.

2. The method of claim 1, further including:

   accessing the existing agricultural and geospatial conditions corresponding to a target plot of land; and
   executing the machine learning model to generate the proposed time to perform the agricultural operation at the target plot of land.

3. The method of claim 2, further including directing an automated agricultural vehicle to perform the agricultural operation at the target plot of land.

4. The method of claim 2 or claim 3, wherein the target plot of land includes at least one of a plurality of plots of land, or a plurality of subplots of land, wherein a first agricultural operation and first proposed time is generated for a first plot of land and a second agricultural operation and second proposed time is generated for a second plot of land.

5. The method of claim 4, further including displaying the plurality of expected times to perform the agricultural operation by overlaying colored sections on an image of the plurality of plots of lands, the colored sections including colors to represent the plurality of expected times.

6. The method of claim 5, wherein displaying the plurality of expected times includes at least one of a histogram of days until the agricultural operation, a priority ranking of the plurality of plots of land, colored sections overlayed on a plurality of subplots of land of a plot of land, or a chart of the plurality of expected times.

7. The method of any one of the preceding claims, wherein agricultural operation data include at least one of a time of the agricultural operation, a location of the agricultural operation, a type of agricultural operation, a type of crop, or a result of the agricultural operation.

8. The method of claim 7, wherein the type of agricultural operation includes at least one of planting a crop, applying a fertilizer, applying a pesticide, applying a fungicide, harvesting a crop, or performing a suitable agricultural operation.

9. The method of claim 7, wherein the result of the agricultural operation includes sensor data collected by a sensor on an agricultural vehicle, the sensor data including a measured quality of the agricultural operation at the time and the location.

10. The method of any one of the preceding claims, wherein filtering the agricultural operation data further includes removing agricultural operation data associated with a time outside of expected crop growing seasons.

11. The method of any one of the preceding claims, wherein the geospatial data additionally include at least one of soil data or agronomic data.

12. The method of claim 11, wherein the agronomic data include at least one of machine health data, farming regulation data, silage capacity data, crop market price data, crop input cost data, available labor data, available equipment data, crop insurance data, or operation cost data.

13. The method of any one of the preceding claims, wherein the satellited imaging data include at least one of a Normalized Difference Vegetation Index (NDVI), a Normalized Difference Water Index (NDWI), or a Modified Soil Adjusted Vegetation Index (MSAVI).

14. The method of any one of the preceding claims, wherein the combined filtered agricultural operation and geospatial data are stored remotely in a cloud database.

15. An apparatus to determine a time to perform an agricultural operation, the apparatus comprising:

display circuitry;
machine-readable instructions; and
programmable circuitry to at least one of instantiate or execute the machine-readable instructions to:

obtain agricultural operation data, the agricultural operation data representing farmer decisions to perform agricultural operations;
filter the agricultural operation data to remove data associated with crop growing cycles outside an expected crop growing cycle duration based on a respective type of the crop, the filtering to create filtered agricultural operation data;
access geospatial data, the geospatial data including at least climate data and satellite imaging data;
combine the filtered agricultural operation data with the geospatial data based on a geographic and time similarity to create a training data set representing historic farmer decisions and corresponding agricultural and geospatial conditions; and

train a machine learning model to generate a proposed time to perform an agricultural operation based on existing agricultural and geospatial conditions.

16. The apparatus of claim 15, wherein the programmable circuitry is to:

access the existing agricultural and geospatial conditions corresponding to a target plot of land; and
executing the machine learning model to generate the proposed time to perform the agricultural operation at the target plot of land.

17. The apparatus of claim 15 or claim 16, wherein the programmable circuitry is to direct an automated agricultural vehicle to perform the agricultural operation at the target plot of land.

18. The apparatus of any one of claims 15 to 17, wherein the programmable circuitry is to provide to a third party a name of the agricultural operation, the proposed time to perform the agricultural operation, and a location of the target plot of land.

100

140

130

120  NETWORK

110

180

150

160   170

FARMER 122

DEALER 124

THIRD PARTY 126

**FIG. 1**

SERVER CIRCUITRY 130

DATABASE INTERFACE
CIRCUITRY
210

MACHINE LEARNING
TRAINING CIRCUITRY  250

AGRICULTURAL
PROCESSING  CIRCUITRY
220

INFERENCE
CIRCUITRY 260

GEOSPATIAL
PROCESSING CIRCUITRY
230

AUTOMATION SIGNALING
CIRCUITRY 270

COMBINATION CIRCUITRY
240

DISPLAY CIRCUITRY
280

FIG.  2

AGRICULTURAL PROCESSING CIRCUITRY 220

FILTER CIRCUITRY 310

ENHANCEMENT
CIRCUITRY
330

INTERPOLATION
CIRCUITRY 320

GEOGRAPHIC
CORRECTION CIRCUITRY
340

FARMING DATA
350

FIG. 3

GEOSPATIAL PROCESSING CIRCUITRY 230

IMAGE FILTER CIRCUITRY
410

OUTLIER REMOVAL
CIRCUITRY 430

CROP GROWTH
CALCULATION CIRCUITRY
420

BOUNDARY CIRCUITRY
440

CONDITION DATA
450

FIG. 4

FIG. 5

510

EP 4 566 435 A1

510

DAYS TO HARVEST

| 120 | 110 | 100 | 90 | 80 | 70 |

**FIG. 6**

FIG. 7A

FIG. 7B

FIG. 8

| Field Name | Days to Harvest | Harvest Priority |
|---|---|---|
| Mid | 22 | 1 |
| East | 28 | 2 |
| West | 36 | 3 |
| Field 2 | 40 | 4 |
| Jordan Field 1 | 40 | 4 |
| Albreck | 42 | 5 |
| Fluer | 42 | 5 |
| By corner | 42 | 5 |

**FIG. 9**

**FIG. 10A**

**FIG. 10B**

## FIG. 11A

## FIG. 11B

DAYS TO HARVEST WITH IQR FILTER (RED)

FIG. 12A

YIELD WITH IQR FILTER (RED)

FIG. 12B

1300

START

TRAINING PHASE 1302 ————————————————————— 1304

ACCESS AGRICULTURAL OPERATION DATA ————————— 1306

PROCESS AGRICULTURAL OPERATION DATA ———————— 1308

ACCESS GEOSPATIAL DATA ————————————————— 1310

PROCESS GEOSPATIAL DATA ————————————————— 1312

COMBINE DATA BASED ON GEOGRAPHIC AND TEMPORAL SIMILARITY ——— 1314

TRAIN MACHINE LEARNING MODEL TO GENERATE A PROPOSED TIME TO
PERFORM AN AGRICULTURAL OPERATION

INFERENCE PHASE 1316 ————————————————————— 1318

ACCESS RELEVANT AGRICULTURAL AND GEOSPATIAL CONDITIONS
CORRESPONDING TO A TARGET PLOT OF LAND

GENERATE PROPOSED TIME TO PERFORM AGRICULTURAL OPERATION AT THE
TARGET PLOT OF LAND ——————————————————————— 1320

DIRECT AUTOMATED AGRICULTURAL VEHICLE TO PERFORM TARGET
AGRICULTURAL OPERATION ——————————————————— 1322

PROVIDE PROPOSED TIME TO PERFORM AGRICULTURAL OPERATION FOR THE
TARGET PLOT OF LAND TO A THIRD PARTY ——————————— 1324

END

FIG. 13

FIG. 14

PROCESS
GEOSPATIAL DATA

1310

REMOVE BAD IMAGE DATA — 1510

CALCULATE CROP GROWTH DATA FROM IMAGE DATA — 1520

REMOVE OUTLIERS — 1530

STORE PROCESSED GEOSPATIAL DATA — 1540

RETURN

FIG. 15

FIG. 16

**FIG. 17**

**FIG. 18**

SOFTWARE
DISTRIBUTION
PLATFORM — 1905

INSTR
1632

NETWORK — 1910

PROCESSOR
PLATFORM(S) — 1900

1632

# FIG. 19

Europäisches
Patentamt

European
Patent Office

Office européen
des brevets

# EUROPEAN SEARCH REPORT

**Application Number**

EP 24 20 7164

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AU 2019 365 214 A1 (CLIMATE LLC [US]) 27 May 2021 (2021-05-27) * the whole document * | 1-18 | INV. A01B79/00 G06N20/00 G06Q10/04 G06Q10/0631 |
| A | US 2016/232621 A1 (ETHINGTON JAMES [US] ET AL) 11 August 2016 (2016-08-11) * the whole document * | 1-18 | |
| A | US 11 432 469 B2 (HEXAGON TECHNOLOGY CT GMBH [CH]) 6 September 2022 (2022-09-06) * the whole document * | 1-18 | |

TECHNICAL FIELDS
SEARCHED       (IPC)

A01B
G06N
G06Q

The present search report has been drawn up for all claims

| Place of search | Date of completion of the search | Examiner |
|---|---|---|
| Munich | 7 March 2025 | Vedoato, Luca |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 20 7164

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2025

| Patent document cited in search report | | Publication date | Patent family member(s) | | Publication date |
|---|---|---|---|---|---|
| AU 2019365214 | A1 | 27-05-2021 | AU | 2019365214 A1 | 27-05-2021 |
| | | | BR | 112021007121 A2 | 20-07-2021 |
| | | | CA | 3117211 A1 | 30-04-2020 |
| | | | CN | 112955000 A | 11-06-2021 |
| | | | EP | 3869934 A1 | 01-09-2021 |
| | | | US | 2020134485 A1 | 30-04-2020 |
| | | | US | 2021342719 A1 | 04-11-2021 |
| | | | WO | 2020086750 A1 | 30-04-2020 |
| US 2016232621 | A1 | 11-08-2016 | AR | 103641 A1 | 24-05-2017 |
| | | | US | 2016232621 A1 | 11-08-2016 |
| | | | US | 2021350478 A1 | 11-11-2021 |
| | | | US | 2024169453 A1 | 23-05-2024 |
| | | | WO | 2016127094 A1 | 11-08-2016 |
| US 11432469 | B2 | 06-09-2022 | CN | 108241905 A | 03-07-2018 |
| | | | EP | 3340130 A1 | 27-06-2018 |
| | | | US | 2018177136 A1 | 28-06-2018 |

EPO FORM P0459